# EUROPEAN PATENT APPLICATION

(11) **EP 1 514 679 A1**
(43) Date of publication of application: **16.03.2005**
(21) Application number: 03725764.9
(22) Date of filing: 09.05.2003
(51) Int. Cl.: B32B 9/00, C01G 23/04, C01F 7/02, C01B 33/113

(54) **THIN FILM MATERIAL AND METHOD FOR PREPARATION THEREOF**

(30) Priority: 09.05.2002 JP 2002134314
(71) Applicant: Riken, Wako-shi, Saitama 351-0198 (JP); Kunitake, Toyoki, Kasuya-gun, Fukuoka 811-2201 (JP)
(72) Inventor: KUNITAKE, Toyoki, Kasuya-gun, Fukuoka 811-2201 (JP); HASHIZUME, Mineo, Ikoma-shi, Nara 630-0101 (JP)
(74) Representative: Zimmermann, Gerd Heinrich
(86) International application number: PCT/JP2003/005819
(87) International publication number: WO 2003/095193

(57) **Abstract**

A thin film material which comprises a polymer thin film layer having a hydroxyl group or a carboxyl group on the surface thereof and a metal oxide thin film layer or an organic/metal oxide composite thin film layer which is bonded with the polymer thin film layer through said hydroxyl group or carboxyl group by a coordinate bond or a covalent bond, and has a whole thickness of 300 nm or less. The thin film material is suitable for general use, can have a structure precisely designed, can be prepared with case and simplicity, has high strength and exhibits self-supporting property.

## Description

### TECHNICAL FIELD

The present invention relates to a novel thin-film material and to a method for producing it. Precisely, the invention relates to a thin-film material having a metal oxide thin-film layer or an organic/metal oxide composite thin-film layer on a polymer thin-film layer, and to a method for surely producing such a thin-film material with good thickness accuracy.

### BACKGROUND ART

A composite material comprising an organic compound and an metal oxide is expected to have mechanical, physical and chemical properties that the individual materials could not have, and developing it is strongly desired in various fields. In fact, a composite material comprising a polymer compound and a metal oxide has combined mechanical properties of toughness of polymer and rigidity of oxide, and is positioned as one of important structural materials of today. In addition, the composite material of a polymer compound and a metal oxide has good elasticity, abrasion resistance and chemical stability, and is expected as tire and shield materials in future. Applicability of metal oxides containing organic molecules in a broad range of from coloration of general-purpose materials to use in novel optical devices is investigated. Further, composite materials mixed in a level of molecule or atom could be a substance group having absolutely novel properties heretofore unknown at all.

Many composite materials could exhibit practicable properties only when they are in the form of thin films. For example, in the semiconductor industry of today, it is an important technical object to further increase the degree of integration of electronic devices. For this, stable insulating thin films are indispensable, of which the film thickness is controlled in nano-level. In precision electronic appliances exposed to mechanical friction such as hard discs, needed are thin films that have seemingly contradictory properties, suitable softness and abrasion resistance.

In the field of optoelectronics that is expected to be in practical use in future, a thin-film coating technique that enables good reflection efficiency is investigated, and development of a process for producing thin-film laminates that satisfy nano-level precision and uniformity is an important technical theme. In particular, in production of optical fibers and optical waveguides, establishment of a thin-film coating technique for substrates having a fine and complicated shape is a pressing need. A composite thin film in which organic molecules of large polarizability such as dye molecules are in regular orientation is a significant target in producing SHG devices.

An organic/metal oxide composite thin film that comprises a metal oxide thin film and an organic compound attracts a great deal of attention as a structural material and also as a means for improving the physical and chemical properties of general-purpose products. Thin-film coating on plastic products that must be transparent for the purpose of imparting thermal, chemical and mechanical stability to the products may make it possible to apply the coated products to a broad range of polymer materials of from eyeglasses to windshields of cars. Needless-to-say, development of a process of producing inexpensive thin films will be an important break-through for the purpose of socially widely popularizing them.

When one component is removed from a composite material comprising an organic compound and a metal oxide, then a porous material with pores having a shape corresponding to the removed component may be produced. In particular, when an organic compound is removed from a composite material of an organic substance and a metal oxide where the two are mixed in the unit of molecular clusters or molecules, through extraction, firing, oxygen plasma treatment or the like, then a nano-porous material with pores corresponding to the shape of molecules may be obtained. When porous material of the type is formed into masses, powders or particles, then they may be applied to adsorbent, etc. When the material is formed into thin films, then they are porous thin films having nanometer-size pores, and they may be applied to ion-exchange membranes or selective permeation membranes.

In many such technical fields, the necessary conditions common to the production process for the above-mentioned composite thin films are that thin films of which the composition and the structure are controlled in nano-level are produced more inexpensively and under mild conditions. At the same time, it is also desired that the thin-film production process enables free designing of mechanical, optical, chemical, thermal and electronic properties of the thin films produced.

Heretofore, some methods mentioned below are known for producing an organic/metal oxide composite thin film. For example, a sol-gel process comprises optionally adding water and an organic solvent to a mixed solution of an alkoxide compound of a metal such as silicon or aluminium and an organic molecule such as surfactant, and forming the solution into a thin film having a thickness of a few µm through dipping or sin coating. When the organic compound is removed from the composite thin film through extraction or firing, then a porous thin film with pores corresponding to the structure of the organic compound may be obtained. However, in this case, the thickness of the gel-coating film is determined depending on the hydrodynamic physical data such as the viscosity and the density of the sol solution, and therefore, it is extremely difficult to product a uniform thin film having a thickness of 0.1 µm or less.

One of the inventors has filed patent applications for a method for producing a metal oxide thin film and an organic/metal oxide composite thin film (JP-A-9-241008 and JP-A-10-249985). According to the method, metal oxide thin films or organic/metal oxide composite thin films can be surely formed with good thickness accuracy.

When the organic molecules are removed from the organic/metal oxide composite thin film prepared by the use of an organic low-molecular compound according to the above-mentioned method, undermild conditions such as treatment with aqueous ammonia, then a metal oxide thin film with pores corresponding to the structure of the molecules can be obtained, and the thin film can be utilized for separation and detection of optical isomers (JP-A-2000-254462).

Further, when the organic compound is removed from the organic/metal oxide composite thin film prepared by the use of an organic compound according to the above-mentioned method, through oxygen plasma treatment, then an amorphous metal oxide thin film can be obtained, and the thin film is expected to have excellent ultra-low dielectric characteristics and can be utilized as an insulating material for circuits patterned in a size of from 10 to 20 nm.

The above-mentioned thin film materials are formed on substrates, but for applications in a broader range, it is desirable that the thin films could still keep their thin-film shape even after they are removed from the substrates. Specifically, it is desirable that the thin films are self-supporting thin films. Self-supporting thin films can be worked into various shapes. Organic/metal oxide composite thin films may be utilized as films for wrapping and various coating.

The term "self-supporting" as referred to the present description is not limited to a case in which, after the support has been removed from it, the metal oxide thin-film layer or the organic/metal oxide composite thin-film layer can still keep the same three-dimensional form as that of the layer before the removal of the support from it, but means that, after the support has been removed from it, the thin film does not irreversibly cause aggregation into masses but the resulting thin film can exist in such a condition that the surface area of the thin film is sufficiently large relative to the thickness thereof. For example, this means a case where the metal oxide thin-film layer or the organic/inorganic oxide composite thin-film layer obtained after removal of the solid substrate from it keeps the form of the thin film before the removal of the solid substrate from it. The wording "keeping the form of thin film" as referred to herein is described more concretely. For example, when a thin film has a thickness of 20 nm, then the wording means that the surface area of the thin film is 100 µm² or more. The presence or absence of self-supportability may be confirmed according to the test method shown in Test Example given hereinunder.

A large number of self-supporting organic/metal oxide composite film materials having a thickness of a few µm or more, which are so-called films, have heretofore produced and utilized. However, only a few examples are known throughout the world, relating to a method for producing self-supporting composite thin-film materials having a thickness of at most hundreds nm, and, at present, no one has succeeded in establishing a practicable method for producing them.

For example, it is known that, in reverse osmosis membranes that are used as separation films for various chemical substances and for seawater desalting, the ultra-thin layer structure in their surface has a significant influence on the properties of the membranes. In this case, it is an important theme how to realize the molecular and atomic structure control of the thin-film structure. Regarding the separation membrane having an ultra-thin-film layer for separation on a porous support, for example, there is known a production method for it that comprises directly forming an ultra-thin-film layer for separation on a porous support through interfacial polymerization, electrolytic polymerization or vapor deposition. However, the method is only applicable to production of thin films of a single component of either a polymer or a metal oxide, and no one has succeeded in establishing a production method for strictly controlling the surface ultra-thin layer of the thin film obtained. A self-supporting thin-film material, of which the film structure is strictly controlled on a molecular and atomic level and which is fixed on a porous support, is expected to be the most suitable material for overcoming the current problems as above.

For producing a submicron-thick, self-supporting composite thin-film material, for example, there is proposed a method that comprises forming, on a solid substrate, a composite film having a layered structure through layer-by-layer adsorption, followed by removing the composite film from the substrate (International Laid-Open W001/72878A1). According to this method, the thin-film structure may be controlled in any desired manner by selecting the adsorption order and the adsorption frequency. However, the usable film components are limited, and at present, therefore, the method could not be a widely general method. In particular, the method is not suitable to the lamination for the above-mentioned composite thin film of a metal oxide and an organic compound.

The present inventors have developed a method for obtaining a self-supporting organic/metal oxide composite thin film, which comprises making a substrate adsorb a polymer layer to be an undercoat layer, then forming thereon a multilayer-structured organic/metal oxide composite thin-film layer according to an alternate surface sol-gel process, and thereafter dissolving the undercoat layer (M. Hashizume and T. Kunitake, Riken Review 38, 36-39 (2001)). According to this method, an organic/metal oxide thin-film layer having a nano-level controlled thickness can be produced under mild conditions. However, the size of the self-supporting organic/metal oxide thin film obtained in the method is at most 15 mm², and the method requires further improvement to be a method for producing thin-film materials.

As in the above, a process for producing a practicable self-supporting organic/metal oxide composite thin film, in which the thickness and the composition of the film produced may be controlled in nano-level, could not be found at present. In consideration of the problems with the conventional thin-film production processes, the necessary conditions for a novel thin-film production process are that thin films can be produced with nano-level accuracy and at good producibility from general precursors, and that the production process itself enables free designing of thin-film structures in order that it may satisfy various requirements of thin-film characteristics.

Accordingly, an object of the present invention is to provide a stable, preferably self-supporting, thin-film material which can be widely used and enables accurate structure designing thereof and which can be produced in a simple manner, and to provide a method for producing the thin-film material.

### DISCLOSURE OF THE INVENTION

We, the present inventors have assiduously studied so as to solve the above-mentioned problems. As a result, we have found that, when a polymer thin-film layer that presents a hydroxyl group or a carboxyl group on the surface thereof is formed as an interlayer on a solid substrate, and when a metal oxide thin film or an organic/metal oxide composite thin film is formed thereon and thereafter the substrate is removed, then the intended, metal oxide thin film or composite thin film can be obtained. In addition, as an improved method of the above-mentioned method, we have further found that, when a polymer undercoat layer is first formed on a solid substrate, and then a polymer thin-film layer that presents a hydroxyl group or a carboxyl group on the surface thereof is formed as an interlayer on it, and when a metal oxide thin film or an organic/metal oxide composite thin film is formed thereon and thereafter the undercoat layer is removed from the substrate, then the intended, metal oxide thin film or composite thin film can also be obtained. On the basis of these findings, we have completed the present invention.

Specifically, the invention provides a thin-film material having an overall thickness of at most 300 nm, which comprises a polymer thin-film layer presenting a hydroxyl group or a carboxyl group on the surface thereof, and a metal oxide thin-film layer or an organic/metal oxide composite thin-film layer that bonds to the polymer thin-film layer in a mode of coordinate bonding or covalent bonding by utilizing the hydroxyl group or the carboxyl group. The invention also provides a self-supporting thin-film material that satisfies all these conditions. Further, the invention provides a self-supporting thin-film material having a thickness of at most 300 nm, which is formed on a liquid presenting a hydroxyl group or a carboxyl group on the surface thereof, and which comprises a metal oxide thin film or an organic/metal oxide composite thin film that bonds to the liquid in a mode of coordinate bonding or covalent bonding by utilizing the hydroxyl group or the carboxyl group. Further, the invention provides a self-supporting thin-film material which comprises a metal oxide thin-film layer and has an overall thickness of at most 300 nm.

The organic/metal oxide composite thin-film layer that constitutes the thin-film material of the invention preferably has a portion where an organic compound is dispersed in a metal oxide, or has a portion where an organic metal oxide and an organic compound form a layered structure in the direction of the thickness thereof, or comprise a portion where an organic compound is dispersed in a metal oxide and a portion where an organic metal oxide and an organic compound form a layered structure in the direction of the thickness thereof. Also preferably, the thin-film material has a structure where at least a part of the organic compound contained in the organic/metal oxide composite thin-film layer or at least a part of the polymer thin-film layer is removed. Also preferably, the removal of the organic compound or the polymer thin-film layer is effected through at least one treatment selected from extraction, firing and oxygen plasma treatment. Also preferably, the structure obtained through the removal of the organic compound and/or the polymer thin-film layer has a thin-film layer of at least one metal oxide (preferably titanium oxide thin-film layer, silica thin-film layer, or alumina-silicate thin-film layer).

According to the invention, for example, there are provided a thin-film material having an area of 25 mm² or more and a thin-film material having a thickness of from 2 to 300 nm, both satisfying the above-mentioned conditions.

The invention also provides methods for producing a thin-film material, which are as follows:
(1) A method for producing a thin-film material, which comprises a step of forming a metal oxide thin film or an organic/metal oxide composite thin film on a solid substrate or on a film formed on a solid substrate, and a step of separating the thin-film material that contains the metal oxide thin film or the organic/metal oxide composite thin film and has a thickness of at most 300 nm.
(2) A method for producing a thin-film material, which comprises a step of forming a polymer thin film that presents a hydroxyl group or a carboxyl group on the surface thereof, on a solid substrate or on a film formed on a solid substrate, a step of forming a metal oxide thin film or an organic/metal oxide composite thin film on the thus-formed polymer thin film, and a step of separating the thin-film material that contains the metal oxide thin film or the organic/metal oxide composite thin film and has a thickness of at most 300 nm.
(3) A method for producing a thin-film material, which comprises a step of forming an undercoat layer on a solid substrate or on a film formed on a solid substrate, a step of forming a metal oxide thin film or an organic/metal oxide composite thin film on the thus-formed undercoat layer, and a step of separating the thin-film material that contains the metal oxide thin film or the organic/metal oxide composite thin film and has a thickness of at most 300 nm.
(4) A method for producing a thin-film material, which comprises a step of forming an undercoat layer on a solid substrate or on a film formed on a solid substrate, a step of forming a polymer thin film that presents a hydroxyl group or a carboxyl group on the surface thereof, on the thus-formed undercoat layer, a step of forming a metal oxide thin film or an organic/metal oxide composite thin film on the thus-formed polymer thin film, and a step of separating the thin-film material that contains the metal oxide thin film or the organic/metal oxide composite thin film and has a thickness of at most 300 nm.

In the production method (1) or (2), the solid substrate is dissolved to separate the thin-film material that contains the metal oxide thin film or the organic/metal oxide composite thin film. In the production method (3) or (4), the undercoat layer is dissolved to separate the thin-film material that contains the metal oxide thin film or the organic/metal oxide composite thin film. Preferably, a polymer soluble in an organic solvent is used for the undercoat layer. The polymer of the type may be formed into a film, for example, according to a spin coating process.

In the production methods (1) to (4), it is desirable that the following step (a) is carried out once or more for the step of forming the metal oxide thin film or the organic/metal oxide composite thin film. Also preferably, the following steps (a) and (b) are carried out once or more each. For example, the step (a) and the step (b) may be carried out alternatively.
(a) A step of making a metal compound or (metal compound + organic compound) having a group capable of condensing with the hydroxyl group or the carboxyl group that exists on the thin-film-forming surface and hydrolyzing to form a hydroxyl group, adsorbed by the thin-film-forming surface, and then hydrolyzing the metal compound existing on the surface.
(b) A step of contacting an organic compound or a cationic polymer compound capable of being chemically adsorbed by the thin-film-forming surface and presenting a hydroxyl group or a carboxyl group on the adsorbed surface, with the thin-film-forming surface to form an organic compound thin film.
   The step (a) may be carried out plural times, for example, using plural types of metal compounds or (metal compounds + organic compounds). In the step of forming the metal oxide thin-film layer or the organic/metal oxide composite thin film, the following step (c) may be carried out finally.
(c) A step of contacting an organic compound which is adsorbed by the thin-film-forming surface but which does not present a hydroxyl group or a carboxyl group on the adsorbed surface, with the thin-film-forming surface to form an organic compound thin film.

Preferably, the production methods (1) to (4) include a step of removing at least a part of the organic compound contained in the organic/metal oxide composite thin film, or at least a part of the polymer thin-film layer. Also preferably, the removal of the organic compound and/or the polymer thin-film layer is effected through at least one treatment selected from extraction, firing and oxygen plasma treatment.

The production methods (1) to (4) provide thin-film materials that satisfy the conditions of the invention. The thin-filmmaterial produced according to the production methods (1) to (4) may be transferred onto a porous solid substrate to give a thin film-attached porous solid substrate.

According to the methods of the invention, self-supporting thin-filmmaterials of which the film thickness is controlled in nano-level can be formed through the operation mentioned above. The formation of such thin films may be based on the principal mentioned below. In this, one embodiment is described where an undercoat layer is formed on a solid substrate, a polymer thin film is formed thereon, then an organic/metal oxide composite thin-film layer is formed thereon, and then the thin-film material is separated.

In this embodiment of the invention, an ultra-thin film of a polymer that presents a hydroxyl group or a carboxyl group on the surface thereof is first formed as an interlayer on a solid substrate or on a polymer undercoat layer formed on a solid substrate, according to a spin-coating process. The surface formed through this operation has a hydroxyl group or a carboxyl group entirely uniformly presented thereon. Specifically, reaction points of a metal compounds are uniformly presented on the entire surface of the interlayer, and, as a result, a uniform organic/metal oxide composite thin-film layer can be formed on the surface of the interlayer. In addition, the interlayer serves as a lining film for the overlying organic/metal oxide composite thin-film layer.

Next, the hydroxyl group or the carboxyl group on the surface formed according to the process as above is contacted with a solution of a metal compound, such as a metal compound having an alkoxyl group, fine particles of a metal alkoxide gel, or a metal complex capable of undergoing chemical adsorption with the hydroxyl group on the surface of the solid (including the interlayer formed according to the above-mentioned process - the same shall apply hereinunder), or a composite material of such a metal compound and an organic compound, whereby the metal compound or the (metal compound + organic compound) is adsorbed by the surface of the solid. In this stage, the metal compound or the (metal compound + organic compound) may be not only strongly adsorbed by the solid surface but also excessively adsorbed as weakly-adsorbed matter. When this is washed for a suitable period of time at a suitable temperature, then only the excessively-adsorbed metal oxide or (metal compound + organic compound) is washed away, and a thin film of the strongly-adsorbed metal compound or (metal compound + organic compound) is formed on the solid surface. When a spin-coating process is employed, then the thickness of the adsorbed layer may be kept all the time constant, and therefore, the adsorbed layer may be directly used as a film-constitutive component without washed. Next, the solid is dipped in water at a suitable temperature for a suitable period of time, or exposed to air containing water vapor, whereby the metal compound molecules adsorbed by the surface are hydrolyzed and condensed with each other to form a metal oxide thin film or an organic/metal oxide composite thin film comprising a metal oxide and an organic compound, and, at the same time an additional hydroxyl group is formed on the surface thereof. As the case may be, the hydrolysis may go with aerial oxidation of the metal atom of the metal compound to form a metal oxide.

When the metal oxide thin film or the organic/metal oxide composite thin film thus formed is dipped in a solution of an organic compound having a functional group capable of being chemically adsorbed by the surface of the thin film, then the organic compound bonds to the surface of the metal oxide thin film or the organic/metal oxide composite thin film and is thereby strongly adsorbed by it. Then, this is washed for a suitable period of time at a suitable temperature, whereby only the weakly-adsorbed matter is washed away and a thin film of the strongly adsorbed organic compound is formed on the surface of the metal oxide thin film or the organic/metal oxide composite thin film. When the thin film formation as above is carried out by the use of an organic compound having a plurality of hydroxyl groups or carboxyl groups, then the hydroxyl groups or carboxyl groups may be kept existing on the surface of the organic compound thin film formed as above. In this case, a metal oxide thin film or organic/metal oxide composite thin film as above may be again formed on it, utilizing the hydroxyl groups or the carboxyl groups on the surface of the organic compound thin film.

Repeating this operation enables successive formation of metal oxide thin films or organic/metal oxide composite thin films on the solid substrate.

Next, the metal oxide thin film or the organic/metal oxide composite thin film is removed from the solid substrate. For this, the solid substrate is dipped in a suitable solution and is dissolved therein; or the interaction between the solid substrate and the ultra-thin-film layer of the polymer that present a hydroxyl group or a carboxyl group on the surface thereof is weakened whereby the metal oxide thin film or the organic/metal oxide composite thin film is removed from the substrate, and, as a result, a self-supporting, metal oxide thin film or organic/metal oxide composite thin film can be thereby obtained. In a case where a polymer undercoat layer is first formed on a solid substrate, the substrate may be dipped in a solution to dissolve the polymer undercoat layer, whereby the metal oxide thin film or the organic/metal oxide composite thin filmmay be removed from the substrate and a self-supporting, metal oxide thin film or organic/metal oxide composite thin film can be obtained. In the thus-obtained, self-supporting metal oxide thin film or organic/metal oxide composite thin film, the polymer ultra-thin-film layer presenting a hydroxyl group or a carboxyl group on its surface, that is an interlayer, serves as a lining film for the overlying metal oxide thin film or organic/metal oxide composite thin film, and it enhances the mechanical strength of the composite thin film.

The self-supporting metal oxide thin film or organic/metal oxide composite thin film thus obtained according to the operation as above may be transferred onto a porous solid substrate, and it may be utilized as permeation membranes. Further, when the organic compound is removed from the composite thin film through extraction, firing or the like treatment, then a metal oxide thin film with pores corresponding to the shape of the molecules of the organic compound can be formed, and it can be utilized as molecular structure-selective permeation membranes.

When the self-supporting organic/metal oxide composite thin film obtained according to the operation as above is subjected to oxygen plasma treatment or the like, then all or a part of the organic component may be removed from the thin film and an amorphous, self-supporting organic/metal oxide composite thin film can be thereby obtained.

Further, when all or a part of the polymer thin-film layer is removed through extraction, firing, oxygen plasma treatment or the like, then a self-supporting metal oxide thin film not having a polymer thin-film layer or a self-supporting metal oxide thin film partly having a polymer thin-film layer may be obtained.

According to the operation as above, in the invention, a self-supporting metal oxide thin film or organic/metal oxide composite thin film can be formed surely with good thickness accuracy.

### BRIEF DESCRIPTION OF THE DRAWINGS

Fig. 1 is a photograph where the composite thin film of Example 1 floats in a solution.
Fig. 2 is a scanning electromicroscopic image of the surface of the composite thin film of Example 1.
Fig. 3 is a scanning electromicroscopic image of the cross section of the composite thin film of Example 1.
Fig. 4 is a photograph of the composite thin film of Example 2.
Fig. 5 is a photograph where the composite thin film of Example 2 floats in a solution.
Fig. 6 is a scanning electromicroscopic image of the surface of the composite thin film of Example 2.
Fig. 7 is a scanning electromicroscopic image of the cross section of the composite thin film of Example 2.
Fig. 8 is a photograph of the composite thin film of Example 3.
Fig. 9 is a photograph where the composite thin film of Example 3 floats in a solution.
Fig. 10 is a scanning electromicroscopic image of the surface of the composite thin film of Example 3.
Fig. 11 is a scanning electromicroscopic image of the cross section of the composite thin film of Example 3.
Fig. 12 is a photograph of the composite thin film of Example 4.
Fig. 13 is a photograph where the composite thin film of Example 4 floats in a solution.
Fig. 14 is a scanning electromicroscopic image of the surface of the composite thin film of Example 4.
Fig. 15 is a scanning electromicroscopic image of the cross section of the composite thin film of Example 4.
Fig. 16 is a photograph of the composite thin film of Example 5.
Fig. 17 is a photograph where the composite thin film of Example 5 floats in a solution.
Fig. 18 is a scanning electromicroscopic image of the surface of the composite thin film of Example 5.
Fig. 19 is a scanning electromicroscopic image of the cross section of the composite thin film of Example 5.
Fig. 20 is a view showing the UV to visible absorption spectral change of the composite thin film of Example 5.
Fig. 21 is a view showing the absorption change at 330 nm of the composite thin film of Example 5.
Fig. 22 is a view showing the absorption maximum change of the solution having passed through the composite thin film of Example 5.
Fig. 23 is a scanning electromicroscopic image of the surface of the composite thin film of Example 5 processed with aqueous ammonia.
Fig. 24 is a scanning electromicroscopic image of the cross section of the composite thin film of Example 5 processed with aqueous ammonia.
Fig. 25 is a scanning electromicroscopic image of the surface of the composite thin film of Example 5 processed through oxygen plasma treatment.
Fig. 26 is a scanning electromicroscopic image of the cross section of the composite thin film of Example 5 processed through oxygen plasma treatment.
Fig. 27 is a photograph of the composite thin film of Example 6.
Fig. 28 is a photograph where the composite thin film of Example 6 floats in a solution.
Fig. 29 is a scanning electromicroscopic image of the surface of the composite thin film of Example 6.
Fig. 30 is a scanning electromicroscopic image of the cross section of the composite thin film of Example 6.
Fig. 31 is a photograph of the composite thin film of Example 7.
Fig. 32 is a scanning electromicroscopic image of the surface of the composite thin film of Example 7.
Fig. 33 is a scanning electromicroscopic image of the cross section of the composite thin film of Example 7.
Fig. 34 is a photograph of the composite thin film of Example 8.
Fig. 35 is a photograph where the composite thin film of Example 8 floats in a solution.
Fig. 36 is a scanning electromicroscopic image of the surface of the composite thin film of Example 8.
Fig. 37 is a scanning electromicroscopic image of the cross section of the composite thin film of Example 8.
Fig. 38 is a photograph of the composite thin film of Example 9.
Fig. 39 is a photograph where the composite thin film of Example 9 floats in a solution.
Fig. 40 is a scanning electromicroscopic image of the surface of the composite thin film of Example 9.
Fig. 41 is a scanning electromicroscopic image of the cross section of the composite thin film of Example 9.
Fig. 42 is a photograph where the composite thin film of Example 10 floats in a solution.
Fig. 43 is a photograph of the composite thin film of Example 11.
Fig. 44 is a photograph where the composite thin film of Example 11 floats in a solution.
Fig. 45 is a scanning electromicroscopic image of the surface of the composite thin film of Example 11.
Fig. 46 is a scanning electromicroscopic image of the cross section of the composite thin film of Example 11.
Fig. 47 is a transmission electromicroscopic image of the composite thin film of Example 11 processed through oxygen plasma treatment.
Fig. 48 is a photograph of the composite thin film of Example 12.
Fig. 49 is a scanning electromicroscopic image of the surface of the composite thin film of Example 12.
Fig. 50 is a scanning electromicroscopic image of the surface of the composite thin film of Example 12.
Fig. 51 is a low-resolution and high-resolution scanning electromicroscopic image of the surface of the composite thin film of Example 13.
Fig. 52 is a scanning electromicroscopic image of the composite thin film of Example 13 processed through plasma treatment.
Fig. 53 is a scanning electromicroscopic image of the composite thin film of Example 13 processed through firing.

### BEST MODE FOR CARRYING OUT THE INVENTION

The thin-film materials and methods for producing them of the invention are described in detail hereinunder. In this description, the numerical range expressed by the wording "a number to another number" means the range that falls between the former number indicating the lowermost limit of the range and the latter number indicating the uppermost limit thereof.

The thin-film material of the invention can be obtained by forming a thin filmon a solid substrate followedby separating the thus-formed thin film, as so mentioned hereinabove.

The solid substrate for use in the invention is not specifically defined in point of its material and surface properties, so far as it is a smooth substrate. The form of smooth substrate may be seemingly one with significant limitation. However, since the organic/metal oxide composite thin film is obtained as a form finally removed from the substrate, the substrate may be worked into any shape, and this means there is substantially no limitation on the form of the substrate. Concretely, typically mentioned for the substrate are inorganic solids of, for example, metal such as silicon or aluminium, as well as glass, titanium oxide or silica; and organic solids such as acrylic plate, polystyrene, cellulose, cellulose acetate or phenolic resin.

Solid substrates not having a hydroxyl group or a carboxyl group on their surface, for example, solid substrates of cadmium sulfide, polyaniline, gold or the like may also be used in the invention, provided that a film having a hydroxyl group or a carboxyl group is additionally formed on their surface. For forming a hydroxyl group or a carboxyl group on the surface of the substrate, employable is any known, hydroxyl group or carboxyl group-forming method. For example, mercaptoethanol is adsorbed by the surface of a solid substrate of metal, whereby a hydroxyl group may be formed on the surface.

On the solid substrate or on the film formed on the solid substrate, an interlayer of a polymer capable of presenting a hydroxyl group or a carboxyl group on the surface thereof may be directly formed, or a polymer undercoat layer may be formed below the interlayer.

When a polymer undercoat layer is formed, the polymer to form the undercoat layer is preferably so selected that it is not readily soluble in the solvent to be used in the subsequent interlayer formationbut is readily soluble in any other solvent. For example, when the solvent for the interlayer formation is water, then preferred for the polymer are polyvinyl phenol and polyvinyl phenol-type photoresist polymer that are insoluble in water but are readily soluble in ethanol; polymethyl methacrylate, polyvinyl acetate and hydroxypropylmethyl cellulose phthalate soluble in acetone or the like; and polystyrene soluble in chloroform or the like. The polymer undercoat layer may be layered on the solid substrate as a solution according to a spin-coating process.

An interlayer may be formed on the solid substrate, or on the film formed on the solid substrate, or on the undercoat layer formed on the solid substrate. For the interlayer, used is a polymer that presents a hydroxyl group or a carboxyl group on the surface thereof. Concretely, typical examples of the polymer are polyvinyl alcohol, polyvinyl phenol, polyacrylic acid, polymethacrylic acid, poly(2-hydroxyethylmethacrylate), as well as polyglutamic acid, polyserine, amylose, and colominic acid. The interlayer serves also as a lining film for the organic/metal oxide composite thin-film layer that is to be subsequently layered over it. For it, therefore, the above-mentioned polymer compounds are preferably selected rather than low-molecular compounds.

The polymer may be layered over the solid substrate according to a spin-coating process that uses the polymer solution. The amount of the hydroxyl group or the carboxyl group that is to be present on the surface of the solid has an influence on the density of the metal oxide thin film to be formed. For forming a good metal thin film, the amount is generally from 5.0 × 10¹³ to 5.0 × 10¹⁴ equivalent/cm², preferably from 1.0 × 10¹⁴ to 2.0 × 10¹⁴ equivalent/cm².

In the invention, the metal compound to be used in forming the metal oxide thin film or the organic/metal oxide composite thin film is not specifically defined, and may be any known compound having a group capable of condensing with the hydroxyl group or the carboxyl group on the solid surface and hydrolyzing to forma hydroxyl group. Typical examples of themetal compound are various types of metal alkoxides, including metal alkoxide compounds such as titanium butoxide (Ti(OⁿBu)₄), zirconium propoxide (Zr(OⁿPr)₄), aluminium butoxide (Al(OⁿBu)₄), niobium butoxide (Nb(OⁿBu)₅); metal alkoxides having two or more alkoxyl groups such as methyltrimethoxysilane (MeSi(OMe)₃), diethyldiethoxysilane (Et₂Si(OEt)₂); metal alkoxides having a ligand and having 2 ormore alkoxyl groups such as acetylacetone; double-alkoxide compounds such as BaTi(OR)ₓ.

Apart from the above-mentioned metal alkoxides, also usable in the invention are fine particles of alkoxide gel obtained through partial hydrolysis and condensation of the metal alkoxide with a small amount of water; binuclear or cluster-type alkoxide compounds having plural or multiple types of metal elements, such as titanium butoxide tetramer (ⁿBuO[Ti (OⁿBu)₂O]₄ⁿBu); polymers based on metal alkoxide compound crosslinked via oxygen atom such as sodium silicate; solution of two or more metal compounds such as sodium metasilicate (Na₂SiO₃) and aluminium nitrate (Al(NO₃)₃.

In the invention, metal complexes capable of undergoing chemical adsorption with the hydroxyl group on the solid surface and hydrolysis to give additional hydroxyl group on the surface may also be used as the metal compound. The metal complexes are concretely metal halides such as cobalt chloride (CoCl₂); metal carbonyl compounds such as titanium oxoacetylacetonate (TiO(AcAc)₂), pentacarbonyl iron (Fe(CO)₅); and their polynuclear clusters.

If desired, in the invention, two or more different types of metal compounds may be combined and used to form a composite oxide thin film on the solid surface. For example, the above-mentioned two metal compounds, Na₂SiO₃ and Al (NO₃)₃ may be combined and used herein.

Also in the invention, the above-mentioned metal compound and an organic compound may be used to form an organic/metal oxide composite thin film on the solid surface.

The organic compound usable in the invention is not specifically defined, so far as it is soluble in the solvent used in forming the organic/metal oxide composite thin film of the organic compound thin film that will be mentioned hereinunder. "Soluble" as referred to herein is not limited to a case where the organic compound is soluble by itself, but includes any other case where the compound becomes soluble in a solvent such as chloroform through formation of a complex thereof with a metal alkoxide, such as 4-phenylazobenzoic acid. The molecular weight of the organic compound is not also specifically defined.

In the invention, the contact of the metal compound or (metal compound + organic compound) with the solid is not specifically defined, for which, for example, employable is a contact method of making a saturated adsorption amount of the metal compound or (metal compound + organic compound) adsorbed by the solid surface. In general, preferably employed is a method of dipping the solid in a solution prepared by dissolving the metal compound or (metal compound + organic compound) in an organic solvent, or a method of applying the solution to the solid surface in a mode of spin coating or the like. The solvent is not specifically defined. For example, for metal alkoxides, generally used is methanol, ethanol, propanol, toluene, carbon tetrachloride, chloroform, cyclohexane or benzene, either singly or as combined. However, solvents that may readily dissolve the above-mentioned interlayer, or that is, the polymer thin-film layer of presenting a hydroxyl group or a carboxyl group on the surface thereof should not be used. Therefore, in many cases, non-polar solvents are used.

The concentration of the metal compound in the solution is preferably from 10 to 100 mM or so.

The contact time and temperature could not be unconditionally defined, as varying depending on the adsorption activity of the metal compound or (metal compound + organic compound) used. In general, however, the timemaybe determined within a range falling between 1 and 20 minutes, and the temperature within a range falling between room temperature and 50°C.

Further, a catalyst such as acid or base may be used in the chemical adsorption so as to greatly shorten the time necessary for the step.

After the above-mentioned operation, there exist, on the solid surface, a saturated adsorption amount of the metal compound or (metal compound + organic compound) adsorbed by the hydroxyl group or the carboxyl group on the surface, and a excessive amount of the metal compound or (metal compound + organic compound) in a mode of physical adsorption thereon.

In the invention, the important requirement is that the excessively-adsorbed metal compound or (metal compound + organic compound) is removed. Specifically, when the excessively-existing metal compound or (metal compound + organic compound) is removed, then the layer of the metal compound or (metal compound + organic compound) chemically adsorbed by the solid surface may form a metal oxide thin film or an organic/metal oxide composite thin film, and therefore, on the basis of the existing amount of the metal compound or (metal compound + organic compound) , the metal oxide thin film or the organic/metal oxide composite thin film can be formed with high accuracy and with high reproducibility.

For removing the excessive metal compound or (metal compound + organic compound), employable is any method capable of selectively removing the metal compound or (metal compound + organic compound) , with no specific limitation. For example, a washing method with the above-mentioned organic solvent is suitable for it. For the washing, preferably employed is a dipping method, a spraying method or a steaming method with the organic solvent. Preferably, the washing temperature is the same as that in the above-mentioned contact treatment.

In the invention, the washing operation to remove the excessive metal compound (or metal compound + organic compound) is followed by hydrolysis. Through the hydrolysis, the metal compound is condensed to form a metal oxide thin film or an organic/metal oxide composite thin film.

However, the excessively-adsorbed layer of the metal compound or (metal compound + organic compound) formed in a condition where the solvent has been almost completely removed as in a spin coating process is homogeneous throughout the film surface, and therefore it may be utilized as a film-constituting component as it is, not removed away. Specifically, the hydrolysis may be carried out without the washing removal of the excessive metal compound or (metal compound + organic compound) . In this case, the thickness of the metal oxide thin film or the organic/metal oxide composite thin film may be controlled to any desired one in nano-level, by changing the concentration of the metal compound solution or the (metal compound + organic compound) solution used for spin coating or changing the spinning speed or the spinning time to thereby change the thickness of the excessively-adsorbed layer of the (metal compound + organic compound).

For the hydrolysis, employable is any known method with no specific limitation. For example, the solid having adsorbed the metal compound or (metal compound + organic compound) is dipped in water, and this operation is the most popular. Preferably, the water for the method is ultra-pure water or ion-exchanged water so as to form a high-purity metal oxide with preventing it from being contaminated with impurities. In the hydrolysis, a catalyst such as acid or base may be used for greatly shortening the necessary time of the step.

However, when a metal compound having high reactivity with water is used, its hydrolysis may be effected by reacting it with water vapor in air.

After the hydrolysis, if desired, the surface may be dried with a drying gas such as nitrogen gas to obtain a metal oxide thin film or an organic/metal compound composite thin film.

In the invention, the thickness of the metal oxide thin film or the organic/metal oxide composite thin film to be formed may be controlled in nano-level by carrying out the above-mentioned series of operation repeatedly once or more.

Specifically, the thickness of the metal oxide thin film or the organic/metal oxide composite thin film can be controlled by carrying out repeatedly once or more the series of operation that comprises chemical adsorption of a metal compound or (metal compound + organic compound) by utilizing the hydroxyl group formed on the surface of the thin film through hydrolysis, removal of the excess metal compound or (metal compound + organic compound) and hydrolysis.

In the invention, the metal oxide thin film or the organic/metal oxide composite thin film formed through the above-mentioned operation may be contacted with an organic compound capable of being chemically adsorbed by the surface of the thin film. The chemical adsorption is based on the chemical bonding such as coordinate bonding or covalent bonding between the two, and the organic compound may be firmly adsorbed by the metal oxide thin film or the organic/metal oxide composite thin film, not removed from it, even when the thin film is subjected to the same treatment as in the above-mentioned method of removing the excess metal compound or (metal compound + organic compound). The type of the adsorption is not specifically defined, including, for example, adsorption caused by coordinate bonding of the oxygen atom of the hydroxyl group or carboxyl group to the metal atom of the metal compound, and adsorption caused by condensation thereof with the hydroxyl group existing in the metal oxide thin film or organic/metal oxide composite thin film.

As so mentioned hereinabove, the organic compound usable in the invention is not specifically defined. From the viewpoint of more firm adsorption thereof, however, it is desirable that the organic compound for use herein has plural hydroxyl groups or carboxyl groups and is solid at room temperature (25°C). Preferred examples of the organic compound of the type are polymer compounds having a hydroxyl group or a carboxyl group such as polyacrylic acid, polyvinyl alcohol, polyvinylphenol, polymethacrylic acid, polyglutamic acid; polysaccharides such as starch, glycogen, colominic acid; bioses and monoses such as glucose, mannose; and porphyrin compounds and dendrimers terminated with a hydroxyl group or a carboxyl group.

Cationic polymer compounds are also preferably used as the organic compound. Since a metal alkoxide and a metal compound may anionically interact with the cation of a cationic polymer compound, the polymer compound may realize firm adsorption. Preferred examples of a cationic polymer compound for use in the invention are PDDA (polydimethyldiallylammonium chloride), polyethylenimine, polylysine, chitosan, amino group-terminated dendrimers.

The organic compound serves not only as a constitutive component for forming a thin film having high mechanical strength but also as a functional site for imparting some function to the thin film material obtained, or as a template component that is removed after the film formation to form pores corresponding to the molecular shape thereof in the thin film.

In the invention, for the contact between the above-mentioned organic compound with the metal oxide thin film or the organic/metal oxide composite thin film, the same method as that for the contact of the above-mentioned metal compound or (metal compound + organic compound) with the solid may be employed with no limitation. In general, preferred is the method of dipping the solid in a solution of the organic compound. Also preferably, the concentration of the organic compound in the solution is from 1 to 10 mg/ml or so. The contact time and temperature may be determined generally within a range falling between 5 and 20 minutes and within a range falling between room temperature and 50°C.

In the invention, it is also desirable that the excess organic compound is removed like in the step of contact with the metal compound of (metal compound + organic compound) . In that manner, the layer of the organic compound that is chemically adsorbed by the surface of the metal oxide thin film or the organic/metal oxide composite thin film forms the organic compound thin film. Accordingly, based on the existing amount of the organic compound, the organic compound thin film may be formed with high accuracy and with high reproducibility. For removing the organic compound in this step, the same method as that for removing the above-mentioned metal compound or (metal compound + organic compound) may be employed with no limitation. Especially preferred is the above-mentioned method of washing away the organic compound by the use of the solvent for it. Preferably, the washing temperature is the same as that in the above-mentioned contact operation.

As in the above, a composite thin film that comprises lamination of a metal oxide thin film or organic/metal oxide composite thin film and an organic compound thin film may be formed on the surface of a solid. In this, when an organic compound having plural hydroxyl groups or carboxyl groups such as that mentioned hereinabove is used, then the hydroxyl groups or carboxyl groups may still remain on the surface of the thin film even after the formation of the organic compound thin film. Accordingly, in this case of the invention, the same operation as above may be repeated by utilizing the hydroxyl groups or the carboxyl groups on the surface of the organic compound thin film, and an additional metal oxide thin film or organic/metal oxide composite thin film may be thereby formed on the surface. Further, still another organic compound thin film may be formed on the surface, and repeating this operation makes it possible to successively form a multi-layered organic/metal oxide composite thin film that comprises various types of metal oxide thin films or organic/metal oxide composite thin films of which the thickness differs in nano-level. In particular, when the operation is so carried out that the metal oxide thin film or organic/metal oxide composite thin film and the organic compound thin film are alternately formed one by one, then the resulting composite thin film has an extremely stable and is therefore preferable.

Repeating the steps in the invention enables accurate forming of composite thin films having a thickness of from a few nanometers to tens nanometers. When a metal alkoxide having one metal atom such as titanium butoxide is used in forming the metal oxide thin film, then thin films each having a thickness of a few angstroms can be successively laminated, depending on the adsorption condition. On the other hand, when fine particles of alkoxide gel are used, then thin films each having a thickness of 60 nanometers or so may be laminated in one cycle. When the metal oxide layer is formed according to a spin-coating process, then the film thickness thereof maybe freely controlled to fall between a few nanometers and 200 nanometers or so by varying the solvent to be used, the alkoxide concentration and the spinning speed. On the other hand, when a polyacrylic acid is used as the organic compound, then a thin film having a thickness of a few angstroms may be formed depending on the adsorption condition. In the invention, thin films accurately having the thickness as above maybe suitably produced, depending on the degree of successive lamination frequency of the above-mentioned metal oxide thin-film layer or organic/metal oxide composite thin-film layer and the organic compound thin-film layer.

In this case, when the type of the metal compound and that of the organic compound to be used are varied, then it is possible to obtain a laminate of composite thin films having a hybrid layer constitution.

As described hereinabove, the invention enables accurate formation of a metal oxide thin film or an organic/metal oxide composite thin film on a solid substrate, directly or via a polymer thin-film layer therebetween. Next, in the invention, the thin-film material having the intended metal oxide thin film or organic/metal oxide composite thin film is separated from the solid substrate.

In the invention, when the metal oxide thin film or the organic/metal oxide composite thin film is directly formed on a solid substrate and when a polymer soluble in an organic solvent, such as an acrylic plate is used as the solid substrate, then the solid substrate with the thin film formed thereon may be dipped in a solvent and the solid substrate portion is dissolved therein to obtain the thin-filmmaterial of the invention. When glass or the like is used for the solid substrate, then the substrate with the metal oxide thin film or the organic/metal oxide composite thin film formed thereon is dipped in a solution of a weak base so as to weaken the interaction of physical adsorption between the substrate and the thin film, and the thin-film material of the invention may be thereby separated from the solid substrate. When the boundary and therearound of the interlayer, or that is, the polymer thin-film layer presenting a hydroxyl group or a carboxyl group on the surface thereof, which is kept in contact with the substrate, is dissolved, then the thin-film material of the invention may also be separated from the substrate.

In the invention, when a polymer undercoat layer is formed on a solid substrate and when a metal oxide thin film or organic/metal oxide composite thin film is formed thereon, then the substrate with the thin film formed thereon may be dipped in a solvent capable of dissolving the polymer undercoat layer and the undercoat layer portion is dissolved therein to obtain the thin-film material of the invention. As compared with the case where the metal oxide thin film or the organic/metal oxide composite thin film is directly formed on a solid substrate, the case where a polymer undercoat layer is formed on a solid substrate and then the metal oxide thin filmor the organic/metal oxide composite thin film is formed on the layer enables more accurate separation of the thin-filmmaterial fromthe substrate under a milder condition.

In the above-mentioned operation, all or a most part of the interlayer, or that is, the polymer thin-film layer having a hydroxyl group or a carboxyl group on the surface thereof is still contained in the thin-film material separated from the substrate, and it serves as a lining film for ensuring the mechanical strength of metal oxide thin filmor the organic/metal oxide composite thin film.

On the other hand, the thin-filmmaterial of the invention may be formed on a liquid that presents a hydroxyl group or a carboxyl group on the surface thereof. Specifically, a metal compound or (metal compound + organic compound) is applied to a liquid that presents a hydroxyl group or a carboxyl group on the surface thereof in the manner as above, and this is hydrolyzed thereon to form a metal oxide thin film or an organic/metal oxide composite thin film, and if desired, additional metal oxide thin film, organic/metal oxide composite thin film and organic compound thin film may be suitably formed thereon to construct a composite thin film. The thickness of the thin-film material that is formed on a liquid in the manner as above is controlled to be at most 300 nm. Thus obtained, the thin-film material may be readily separated from the liquid while it keeps its self-supportability. Examples of the liquid that presents a hydroxyl group or a carboxyl group on the surface thereof are liquid compounds having a hydroxyl group or a carboxyl group (e.g., water; alcohols such as methanol, ethanol, isopropanol; carboxylic acids such as acetic acid, propionic acid) ; liquid mixtures containing a liquid that has a hydroxyl group or a carboxyl group (e.g., water-acetonitrile, water-THF, chloroform-methanol, toluene-ethanol); and solutions of organic compounds (polymers) having a hydroxyl group or a carboxyl group (e.g., DMF solution of polyacrylic acid, methyl cellosolve solution of poly(2-hydroxyethyl methacrylate), methyl ethyl ketone solution of hydroxypropylmethyl cellulose phthalate, THF solution of polyvinylphenol).

As described hereinabove, the thin-film material of the invention can be produced accurately according to the above-mentioned methods.

The thin-film material of the invention thus produced in the manner as above may be transferred not only onto a solid substrate such as quartz or silicon, but also onto a porous support such as glass filter, membrane filter or alumina porous film, in any known method. The thin-film material thus taken out from the solution in the manner as above may be extracted or fired so as to remove the organic compound from the thin-film material, and a layer that has pores corresponding to the shape of the molecules of the organic compound may be formed. In particular, the material obtained by removing the organic compound from the organic/metal oxide composite thin-film layer of the thin-film material fixed on a porous support can be utilized as a molecular shape-selective permeation membrane. When the organic/metal oxide composite thin film taken out of the solution is processed through oxygen plasma treatment, then all or a part of the organic substance may be removed from the thin film and an amorphous organic/metal oxide composite thin film may be thereby produced.

Further, in the same manner as in the removal of the above-mentioned organic compound, all or a part of the polymer thin-film layer that functions as a lining film for the metal oxide thin film or the organic/metal oxide composite thin film may also be removed from the metal oxide thin film or the organic/metal oxide composite thin film by processing the thin-film material for extraction, firing or oxygen plasma treatment. Accordingly, a metal oxide thin film can be formed, from which the organic compound and the polymer compound are completely removed.

The above-mentioned extraction, firing and oxygen plasma treatment may be suitably determined in accordance with the properties of the metal oxide, the organic compound and the polymer used in the invention.

For example, the time, the pressure, the power and the temperature of the oxygen plasma treatment may be suitably determined, depending on the type of the metal compound and the organic compound that constitute the metal oxide thin film and the organic/metal oxide composite thin film to be subjected to the oxygen plasma treatment, and on the size of the thin film to be processed and the plasma source to be employed. Concretely, the pressure for oxygen plasma treatment may be from 1.33 to 66.5 Pa (10 to 50 mTorr), preferably from 13.3 to 26. 6 Pa (100 to 200 mTorr). The plasma power for the oxygen plasma treatment may be from 5 to 500 W, preferably from 10 to 50 W. The processing time for the oxygen plasma treatment may be from 5 minutes to a few hours, preferably from 5 to 60 minutes. The temperature for the oxygen plasma treatment is low, preferably falling between -30 and 300°C, more preferably between 0 and 100°C, most preferably room temperature (5 to 40°C). The plasma device to be used for the oxygen plasma treatment is not specifically defined. For example, PE-2000 Plasma Etcher by South Bay Technology, USA may be employed herein.

Further, for example, the firing conditions may be as follows: In air, the firing may be effected at 100 to 1000°C, preferably at 300 to 500°C, for 30 seconds to 1 hour, preferably for 1 to 20 minutes.

As described in detail hereinabove, a self-supporting metal oxide thin film or organic/metal oxide composite thin film having a nano-level thickness can be produced under a mild condition and in a simple manner according to the invention. Further, according to the invention, a stable self-supporting metal oxide thin film or organic/metal oxide composite thin film having a diversified multi-layered structure can be produced, and its producibility is extremely high. The methods of the invention that are characterized by these advantages not seen in any others are expected to be applicable to various fields, for example, as an important basic technology that supports high-integration devices of the next generation, as a various coating material for general-purpose articles, as a means for producing thin-film materials having new electric, electronic, magnetic and photofunctional properties, as a material for improving physicochemical properties of solid surfaces, as a means for constructing a high-efficiency catalyst system, as a means for planning and producing various separation-functional membranes, and as a means for planning and producing various types of organic and inorganic composite ultra-thin-film materials.

### EXAMPLES

The characteristics of the invention are described more concretely with reference to the following Examples. The materials, their amount and proportion, and the details of the treatment and the treatment order in the following Examples may be suitably changed and modified, not overstepping the gist and the scope of the invention. Accordingly, the scope of the invention should not be limitatively interpreted by the concrete examples shown below.

### (Example 1)

An acrylic plate (thickness 0.3 mm) was used as a solid substrate. The acrylic plate was cut into a piece having a size of about 1.5 cm × 2.5 cm, and its surface was washed with ethanol and dried with a stream of nitrogen. An aqueous solution of polyvinyl alcohol (by Polyscience; molecular weight, at most 78000) (5 mg/ml) was applied onto the surface in a mode of spin coating under a condition of 3000 rpm × 2 minutes. The surface was well dried in air, and then a stream of nitrogen was applied to the surface, by which the surface was dried and dust was removed from it. Next, a chloroform solution of titanium butoxide (TiOⁿBu)₄) (100 mM) was applied onto the surface in a mode of spin coating under a condition of 3000 rpm × 2 minutes. Next, for hydrolyzing the alkoxide with water vapor in air, the substrate was left in air for 12 hours. Then, a stream of nitrogen was applied onto the surface, by which the surface was dried and dust was removed from it. The substrate was dipped in acetone in a sample tube, whereupon the acrylic plate began to swell and dissolve, and after about 12 hours, a polyvinyl alcohol/titanium oxide composite thin film was obtained in the form thereof removed from the substrate.

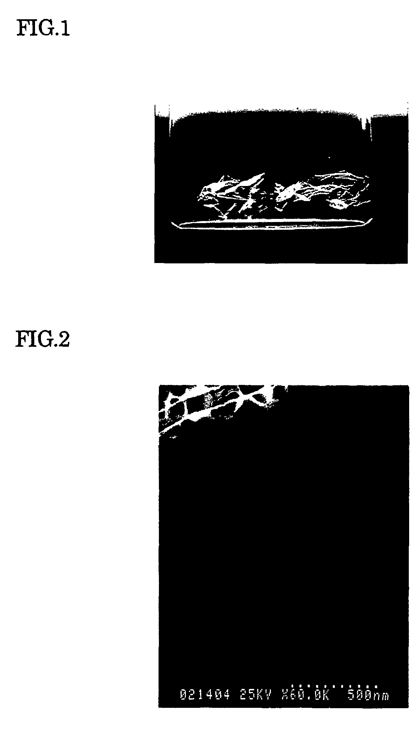

Fig. 1 is a photograph of the polyvinyl alcohol/titanium oxide composite thin film floating in the sample tube having a diameter of 35 mm. The thus-obtained polyvinyl alcohol/titanium oxide composite thin film was transferred onto an alumina porous film (pore diameter, 100 nm), and its morphology was observed with a scanning electronic microscope. Fig. 2 shows the scanning electromicroscopic image of the surface of the polyvinyl alcohol/titanium oxide composite thin film. It was confirmed that the composite thin film has a nano-level smooth surface. Since the thin film lets electron rays through it in some degree, the porous structure of the alumina support below the thin film was seen. Fig. 3 shows the scanning electromicroscopic image of the cross section of the polyvinyl alcohol/titanium oxide composite thin film cut in the thickness direction thereof. It is obvious that composite thin films having a thickness of from about 20 to 40 nm can be obtained under the production condition as herein.

### (Example 2)

A silicon wafer (diameter 20 cm) having a 500 nm-thick photoresist film (Tokyo Ohka Kogyo, TUDR-P015 PM) formed thereon was used as a substrate. The substrate was cut into a piece having a size of about 3 cm × 4 cm. A stream of nitrogen was applied to its surface, by which the surface was dried and dust was removed from it. An aqueous solution of polyvinyl alcohol (molecular weight, at most 78000) (5 mg/ml) was applied onto the surface in a mode of spin coating (3000 rpm × 2 minutes). The surface was well dried in air, and then a stream of nitrogen was applied to the surface, by which the surface was dried and dust was removed from it. Next, a chloroform solution of titanium butoxide (10 mM) was applied onto the surface in a mode of spin coating (3000 rpm × 2 minutes). Next, for hydrolyzing the alkoxide with water vapor in air, the substrate was left in air for 10 hours. Next, the substrate was scratched with a needle-like tool to a range of about 1 mm from the outer periphery thereof, in order that a solvent could readily penetrate through it. Then, a stream of nitrogen was applied onto the surface, by which the surface was dried and dust was removed from it. The substrate was put on a laboratory dish, and ethanol was gently poured into the dish from the periphery of the substrate to such a degree that the substrate could be well dipped in ethanol. Within a few minutes, the photoresist began to dissolve, and the polyvinyl alcohol/titanium oxide composite thin film began to peel from the scratched part of the substrate.

Fig. 4 shows the polyvinyl alcohol/titanium oxide composite thin film separated from the silicon wafer; and Fig. 5 shows the thin film transferred into a sample bottle having a diameter of 27 mm and filled with ethanol. It is obvious that the polyvinyl alcohol/titanium oxide composite thin film having nearly the same size as the area of the silicon wafer was obtained. The thus-obtained polyvinyl alcohol/titanium oxide composite thin film was transferred onto an alumina porous film (pore diameter, 100 nm), and its morphology was observed with a scanning electronic microscope. Fig. 6 shows the scanning electromicroscopic image of the surface of the polyvinyl alcohol/titanium oxide composite thin film. It was confirmed that the composite thin film has a nano-level smooth surface. Fig. 7 shows the scanning electromicroscopic image of the cross section of the polyvinyl alcohol/titanium oxide composite thin film. It is obvious that composite thin films having a thickness of about 20 nm can be obtained under the production condition as herein.

### (Example 3)

A silicon wafer (diameter 20 cm) having a 500 nm-thick photoresist film (Tokyo Ohka Kogyo, TUDR-P015 PM) formed thereon was used as a substrate. The substrate was cut into a piece having a size of about 3 cm × 4 cm. A stream of nitrogen was applied to its surface, by which the surface was dried and dust was removed from it. An aqueous solution of polyvinyl alcohol (by Polyscience; molecular weight, at most 78000) (5 mg/ml) was applied onto the surface in a mode of spin coating (3000 rpm × 2 minutes). The surface was well dried in air, and then a stream of nitrogen was applied to the surface, by which the surface was dried and dust was removed from it. Next, a chloroform solution of aluminium butoxide (Al(OⁿBu)₃) (100 mM) was applied onto the surface in a mode of spin coating (3000 rpm × 2 minutes). Next, for hydrolyzing the alkoxide with water vapor in air, the substrate was left in air for 10 hours. Next, the substrate was scratched with a needle-like tool to a range of about 1 mm from the outer periphery thereof, in order that a solvent could readily penetrate through it. Then, a stream of nitrogen was applied onto the surface, by which the surface was dried and dust was removed from it. The substrate was put on a laboratory dish, and ethanol was gently poured into the dish from the periphery of the substrate to such a degree that the substrate could be well dipped in ethanol. Within a few minutes, the photoresist began to dissolve, and the polyvinyl alcohol/aluminium oxide composite thin film began to peel from the scratched part of the substrate.

Fig. 8 shows the polyvinyl alcohol/aluminium oxide composite thin film separated from the silicon wafer; and Fig. 9 shows the thin film transferred into a sample bottle having a diameter of 27 mm and filled with ethanol. It is obvious that the polyvinyl alcohol/aluminium oxide composite thin film having nearly the same size as the area of the silicon wafer was obtained. The thus-obtained polyvinyl alcohol/aluminium oxide composite thin film was transferred onto an alumina porous film (pore diameter, 100 nm), and its morphology was observed with a scanning electronic microscope. Fig. 10 shows the scanning electromicroscopic image of the surface of the polyvinyl alcohol/aluminium oxide composite thin film. It was confirmed that the composite thin film has a nano-level smooth surface. Fig. 11 shows the scanning electromicroscopic image of the cross section of the polyvinyl alcohol/aluminium oxide composite thin film. It is obvious that composite thin films having a thickness of from about 50 to 100 nm can be obtained under the production condition as herein.

### (Example 4)

A silicon wafer (diameter 20 cm) having a 500 nm-thick photoresist film (Tokyo Ohka Kogyo, TUDR-P015 PM) formed thereon was used as a substrate. The substrate was cut into a piece having a size of about 3 cm × 4 cm. A stream of nitrogen was applied to its surface, by which the surface was dried and dust was removed from it. An aqueous solution of polyvinyl alcohol (by Polyscience; molecular weight, at most 78000) (5 mg/ml) was applied onto the surface in a mode of spin coating (3000 rpm × 2 minutes). The surface was well dried in air, and then a stream of nitrogen was applied to the surface, by which the surface was dried and dust was removed from it. Next, a chloroform solution of tetramethoxysilane (Si(OMe)₄) (100 mM) was applied onto the surface in a mode of spin coating (3000 rpm × 2 minutes). Next, for hydrolyzing the alkoxide with water vapor in air, the substrate was left in air for 10 hours. Next, the substrate was scratched with a needle-like tool to a range of about 1 mm from the outer periphery thereof, in order that a solvent could readily penetrate through it. Then, a stream of nitrogen was applied onto the surface, by which the surface was dried and dust was removed from it. The substrate was put on a laboratory dish, and ethanol was gently poured into the dish from the periphery of the substrate to such a degree that the substrate could be well dipped in ethanol. Within a few minutes, the photoresist began to dissolve, and the polyvinyl alcohol/silicon oxide composite thin film began to peel from the scratched part of the substrate.

Fig. 12 shows the polyvinyl alcohol/silicon oxide composite thin film separated from the silicon wafer; and Fig. 13 shows the thin film transferred into a sample bottle having a diameter of 27 mm and filled with ethanol. It is obvious that the polyvinyl alcohol/silicon oxide composite thin film having nearly the same size as the area of the silicon wafer was obtained. The thus-obtained polyvinyl alcohol/silicon oxide composite thin film was transferred onto an alumina porous film (pore diameter, 100 nm), and its morphology was observed with a scanning electronic microscope. Fig. 14 shows the scanning electromicroscopic image of the surface of the polyvinyl alcohol/silicon oxide composite thin film. It was confirmed that the composite thin film has a nano-level smooth surface. Fig. 15 shows the scanning electromicroscopic image of the cross section of the polyvinyl alcohol/silicon oxide composite thin film. It is obvious that composite thin films having a thickness of about 20 nm can be obtained under the production condition as herein.

It is obvious that the thickness of the composite thin film obtained varies, depending on the type of the metal alkoxide used. The thickness of the polyvinyl alcohol/metal oxide composite thin films obtainedby the use of a chloroform solution of different types of metal alkoxides (100 mM) under the above-mentioned film-forming condition is as follows: aluminium butoxide, about 50 to 100 nm; tetramethoxysilane, about 20 nm; titanium butoxide, about 120 to 180 nm; niobium alkoxide, about 40 to 60 nm; zirconium butoxide, about 50 nm.

### (Example 5)

A silicon wafer (diameter 20 cm) having a 500 nm-thick photoresist film (Tokyo Ohka Kogyo, TUDR-P015 PM) formed thereon was used as a substrate. The substrate was cut into a piece having a size of about 3 cm × 4 cm. A stream of nitrogen was applied to its surface, by which the surface was dried and dust was removed from it. An aqueous solution of polyvinyl alcohol (by Polyscience; molecular weight, at most 78000) (5 mg/ml) was applied onto the surface in a mode of spin coating (3000 rpm × 2 minutes). The surface was well dried in air, and then a stream of nitrogen was applied to the surface, by which the surface was dried and dust was removed from it. Titanium butoxide to be 100 mM was added to a chloroform suspension of 4-phenylazobenzoic acid (20 mM). As a result of the titanium butoxide addition thereto, 4-phenylazobenzoic acid dissolved to form a uniform solution. The resulting solution was stirred at room temperature for 8 hours, and then applied onto the surface of the substrate in a mode of spin coating (3000 rpm × 2 minutes). Next, for hydrolyzing the alkoxide with water vapor in air, the substrate was left in air for 10 hours. Next, the substrate was scratched with a needle-like tool to a range of about 1 mm from the outer periphery thereof, in order that a solvent could readily penetrate through it. Then, a stream of nitrogen was applied onto the surface, by which the surface was dried and dust was removed from it. The substrate was put on a laboratory dish, and ethanol was gently poured into the dish from the periphery of the substrate to such a degree that the substrate couldbe well dipped in ethanol. Within a fewminutes, the photoresist began to dissolve, and the polyvinyl alcohol/(4-phenylazobenzoic acid + titanium oxide) composite thin film began to peel from the scratched part of the substrate.

Fig. 16 shows the polyvinyl alcohol/ (4-phenylazobenzoic acid + titanium oxide) composite thin film separated from the silicon wafer; and Fig. 17 shows the thin film transferred into a sample bottle having a diameter of 27 mm and filled with ethanol. It is obvious that the polyvinyl alcohol/(4-phenylazobenzoic acid + titanium oxide) composite thin film having nearly the same size as the area of the silicon wafer was obtained. The thus-obtained polyvinyl alcohol/(4-phenylazobenzoic acid + titanium oxide) composite thin film was transferred onto an alumina porous film (pore diameter, 100 nm or 200 nm) , and its morphology was observed with a scanning electronic microscope. Fig. 18 shows the scanning electromicroscopic image of the surface of the polyvinyl alcohol/(4-phenylazobenzoic acid + titanium oxide) composite thin film. It was confirmed that the composite thin film has a nano-level smooth surface. Fig. 19 shows the scanning electromicroscopic image of the cross section of the polyvinyl alcohol/(4-phenylazobenzoic acid + titanium oxide) composite thin film. It is obvious that composite thin films having a thickness of about 140 nm can be obtained under the production condition as herein.

Apart from the above, it was also confirmed that, even when any other organic molecules than 4-phenylazobenzoic acid, for example, aromatic substituent-having compounds such as 3-methylsalicylic acid, carbobenzyloxy-L-phenylalanine or 4-(2-pyridylazo)resorcinol; or organic molecules having plural hydroxyl groups or carboxyl groups such as glucose or polyacrylic acid, is used, similar composite thin films can be obtained. Further, even when cyclohexane is used as the spin-coating solvent, the same results can be obtained. It was further confirmed that, even when any other metal alkoxide such as aluminium butoxide or zirconium butoxide, similar composite thin films can be obtained.

The polyvinyl alcohol/(4-phenylazobenzoic acid + titanium oxide) composite thin film thus obtained in the manner as above was transferred onto a quartz substrate. First, the UV to visible absorption spectrum of the substrate was measured. Next, the substrate was dipped in aqueous 1 % ammonia for 1 hour with gently stirring at room temperature, and washed with ethanol and then ultra-pure water. Next, a stream of nitrogen was applied to it so as to dry it, and then its UV to visible absorption spectrum was measured. Next, the substrate was dipped in a tetrahydrofuran (THF) solution of 4-phenylazobenzoic acid (10 mM) for 1 hour with gently stirring at room temperature, and then washed with THF and ethanol. Next, a stream of nitrogen was applied to it so as to dry it, and then its UV to visible absorption spectrum was measured.

Fig. 20 shows the change of the UV to visible absorption spectrumof the samples after the dipping operations all repeated twice. Fig. 21 shows the absorbance change at 330 nm in Fig. 20. These results confirm that the composite thin film obtained contained the dye, 4-phenylazobenzoic acid molecules; that the dye molecules could be readily removed from the thin film when the thin film is dipped in aqueous ammonia; that, when the thin film from which the dye molecules were removed is dipped in a solution of the dye molecules, then the dye molecules are again adsorbed by the thin film; and that the dye desorption and re-adsorption phenomenon of the dye by the thin film is reversible. This indicates that, through the extraction with aqueous ammonia, pores corresponding to the shape of the 4-phenylazobenzoic acid molecules are formed in the thin film, and the resulting porous structure of the thin film is maintained.

The polyvinyl alcohol/(4-phenylazobenzoic acid + titanium oxide) composite thin film obtained in the manner as above was transferred onto an aluminium porous plate in such a manner that the film could completely cover the surface of the plate. Next, the substrate was dipped in aqueous 1 % ammonia for 2 hours, while statically kept at room temperature, and washed with ethanol and then ultra-pure water. Next, a stream of nitrogen was applied to it so as to dry it, and the film sample was fitted to a filter cartridge unit. Solutions mentioned below were made to pass through the sample, and the absorption spectral change by the solutions was traced.

Fig. 22 shows the absorption maximum change (as a relative value based on the sample before solution application thereto of 100 %) resulting from the dye in each solution. Concretely, a THF solution of any of benzoic acid (100 mM), azobenzene (1 mM) or 4-phenylazobenzoic acid (1 mM) was made to pass through the sample twice each. The absorption intensity reduction indicates that the dye molecules were adsorbed and held by the composite thin film on the film sample. These results confirm that the composite thin film from which the dye molecules were removed through extraction aqueous ammonia has pores corresponding to the shape of the molecules of 4-phenylazobenzoic acid, and therefore it can selectively adsorb and keep therein the template, 4-phenylazobenzoic acid rather than the other dye molecules of benzoic acid or azobenzene.

The polyvinyl alcohol/(4-phenylazobenzoic acid + titanium oxide) composite thin film obtained in the manner as above was transferred onto plural aluminium porous plates. A part of the samples were dipped in aqueous 1 % ammonia for 2 hours, while statically kept at room temperature, and washed with ethanol and then ultra-pure water. Next, a stream of nitrogen was applied to them so as to dry them. The other samples were subjected to oxygen plasma treatment at a high-frequency power of 30 W for 30 minutes to thereby remove 4-phenylazobenzoic acid from the thin films. Thus processed, the samples were observed with a scanning electronic microscope and evaluated in point of the influence of the aqueous ammonia treatment and the oxygen plasma treatment on the morphology of the composite thin film.

Fig. 23 shows the scanning electromicroscopic image of the surface of the polyvinyl alcohol/ (4-phenylazobenzoic acid + titanium oxide) composite thin film after treatment with aqueous ammonia; and Fig. 24 shows the cross-section image of the thin film. When these are compared with the results in Fig. 18 and Fig. 19, it is obvious that the morphology of the composite thin film changed little after the aqueous ammonia treatment in the scanning electromicroscopic level resolution. Fig. 25 shows the scanning electromicroscopic image of the surface of the polyvinyl alcohol/(4-phenylazobenzoic acid + titanium oxide) composite thin film after oxygen plasma treatment; and Fig. 26 shows the cross-section image of the thin film. When these are compared with the results in Fig. 18 and Fig. 19, it is obvious that the morphology of the composite thin film changed little after the oxygen plasma treatment in the scanning electromicroscopic level resolution.

### (Example 6)

A silicon wafer (diameter 20 cm) having a 500 nm-thick photoresist film (Tokyo Ohka Kogyo, TUDR-P015 PM) formed thereon was used as a substrate. The substrate was cut into a piece having a size of about 3 cm × 4 cm. A stream of nitrogen was applied to its surface, by which the surface was dried and dust was removed from it. An aqueous solution of polyvinyl alcohol (by Polyscience; molecular weight, at most 78000) (5 mg/ml) was applied onto the surface in a mode of spin coating (3000 rpm × 2 minutes). The surface was well dried in air, and then a stream of nitrogen was applied to the surface, by which the surface was dried and dust was removed from it. Titanium butoxide to be 10 mM was added to a chloroform solution of polymethyl methacrylate (number-average molecular weight, 69000) (0.5 mM in terms of monomer). The resulting solution was stirred at room temperature for 8 hours, and then applied onto the surface of the substrate in a mode of spin coating (3000 rpm × 2 minutes). Next, for hydrolyzing the alkoxide with water vapor in air, the substrate was left in air for 10 hours. Next, the substrate was scratched with a needle-like tool to a range of about 1 mm from the outer periphery thereof, in order that a solvent could readily penetrate through it. Then, a stream of nitrogen was applied onto the surface, by which the surface was dried and dust was removed from it. The substrate was put on a laboratory dish, and ethanol was gently poured into the dish from the periphery of the substrate to such a degree that the substrate could be well dipped in ethanol. Within a few minutes, the photoresist began to dissolve, and the polyvinyl alcohol/(polymethyl methacrylate + titanium oxide) composite thin film began to peel from the scratched part of the substrate.

Fig. 27 shows the polyvinyl alcohol/(polymethyl methacrylate + titanium oxide) composite thin film separated from the silicon wafer; and Fig. 28 shows the thin film transferred into a sample bottle having a diameter of 27 mm and filled with ethanol. It is obvious that the polyvinyl alcohol/(polymethyl methacrylate + titanium oxide) composite thin film having nearly the same size as the area of the silicon wafer was obtained. The thus-obtained polyvinyl alcohol/(polymethyl methacrylate + titanium oxide) composite thin film was transferred onto an alumina porous film (pore diameter, 100 nm), and its morphology was observed with a scanning electronic microscope. Fig. 29 shows the scanning electromicroscopic image of the surface of the polyvinyl alcohol/ (polymethyl methacrylate + titanium oxide) composite thin film. Though the composite thin film had a smooth surface, nano-level cracks were found throughout the film surface. Such cracks were not seen in the above-mentioned composite films. This will be because, since there exists no covalent bond between polymethyl methacrylate and titanium oxide, the crosslinked structure inside the (polymethyl methacrylate + titanium oxide) layer would not fully grow. Fig. 30 shows the scanning electromicroscopic image of the cross section of the polyvinyl alcohol/ (polymethyl methacrylate + titanium oxide) composite thin film. It is obvious that composite thin films having a thickness of about 20 to 50 nm can be obtained under the production condition as herein.

### (Example 7)

A silicon wafer (diameter 20 cm) having a 500 nm-thick photoresist film (Tokyo Ohka Kogyo, TUDR-P015 PM) formed thereon was used as a substrate. The substrate was cut into a piece having a size of about 3 cm × 4 cm. A stream of nitrogen was applied to its surface, by which the surface was dried and dust was removed from it. An aqueous solution of polyvinyl alcohol (by Polyscience; molecular weight, at most 78000) (5 mg/ml) was applied onto the surface in a mode of spin coating (3000 rpm × 2 minutes). The surface was well dried in air, and then a stream of nitrogen was applied to the surface, by which the surface was dried and dust was removed from it. Titanium butoxide to be 100 mM was added to a chloroform suspension of 4-phenylazobenzoic acid (20 mM). As a result of the titanium butoxide addition thereto, 4-phenylazobenzoic acid dissolved to form a uniform solution. The resulting solution was stirred at room temperature for 8 hours. The substrate was inclined by 30°C from the horizontal direction, and the solution was cast onto the surface of the substrate from its upper end (flow-casting process). After 1 minute, the surface of the substrate was washed with chloroform. Next, for hydrolyzing the alkoxide with water vapor in air, the substrate was left in air for 10 hours. Next, the substrate was scratched with a needle-like tool to a range of about 1 mm from the outer periphery thereof, in order that a solvent could readily penetrate through it. Then, a stream of nitrogen was applied onto the surface, by which the surface was dried and dust was removed from it. The substrate was put on a laboratory dish, and ethanol was gently poured into the dish from the periphery of the substrate to such a degree that the substrate could be well dipped in ethanol. Within a few minutes, the photoresist began to dissolve, and the polyvinyl alcohol/ (4-phenylazobenzoic acid + titanium oxide) composite thin film began to peel from the scratched part of the substrate.

Fig. 31 shows the polyvinyl alcohol/ (4-phenylazobenzoic acid + titanium oxide) composite thin film separated from the silicon wafer. It is obvious that the polyvinyl alcohol/ (4-phenylazobenzoic acid + titanium oxide) composite thin film having nearly the same size as the area of the silicon wafer was obtained. The thus-obtained polyvinyl alcohol/(4-phenylazobenzoic acid + titanium oxide) composite thin film was transferred onto an alumina porous film (pore diameter, 100 nm), and its morphology was observed with a scanning electronic microscope. Fig. 32 shows the scanning electromicroscopic image of the surface of the polyvinyl alcohol/ (4-phenylazobenzoic acid + titanium oxide) composite thin film; and Fig. 33 shows the scanning electromicroscopic image of the cross section of the composite thin film. It is obvious that the polyvinyl alcohol/(4-phenylazobenzoic acid + titanium oxide) composite thin film has a smooth surface, and its thickness is from about 20 to 50 nm under the production condition herein. The results confirm that the intended composite thin film can be obtained according to the flow-casting process. When these are compared with the results in Fig. 18 and Fig. 19, it is obvious that the composite thin films obtained according to the flow-casting process are thinner than those obtained according to the spin-coating process, but the defect of the former is that the film surface may be uneven.

### (Example 8)

A silicon wafer was cut into a piece having a size of about 3 cm × 4 cm. A stream of nitrogen was applied to its surface, by which the surface was dried and dust was removed from it. An aqueous solution of polyvinylphenol (molecular weight, 8000) (50 mg/ml) was applied onto the surface in a mode of spin coating. The surface was well dried in air, and then a stream of nitrogen was applied to the surface, by which the surface was dried and dust was removed from it. Next an aqueous solution of polyvinyl alcohol (by Polyscience; molecular weight, at most 78000) (5 mg/ml) was applied onto the surface of the substrate in a mode of spin coating (3000 rpm × 2 minutes). The surface was well dried in air, and then a stream of nitrogen was applied to the surface, by which the surface was dried and dust was removed from it. Next, a chloroform solution of titanium butoxide (100 mM) was applied onto the surface in a mode of spin coating (3000 rpm × 2 minutes). Next, for hydrolyzing the alkoxide with water vapor in air, the substrate was left in air for 10 hours. Next, the substrate was scratched with a needle-like tool to a range of about 1 mm from the outer periphery thereof, in order that a solvent could readily penetrate through it. Then, a stream of nitrogen was applied onto the surface, by which the surface was dried and dust was removed from it. The substrate was put on a laboratory dish, and ethanol was gently poured into the dish from the periphery of the substrate to such a degree that the substrate could be well dipped in ethanol. Within a few minutes, polyvinylphenol began to dissolve, and the polyvinyl alcohol/titanium oxide composite thin film began to peel from the scratched part of the substrate.

Fig. 34 shows the polyvinyl alcohol/titanium oxide composite thin film separated from the silicon wafer; and Fig. 35 shows the thin film transferred into a sample bottle having a diameter of 27 mm and filled with ethanol. It is obvious that the polyvinyl alcohol/titanium oxide composite thin film was obtained in such a manner that the thin film corresponding to the area of the silicon wafer was divided into a few sheets. The thus-obtained polyvinyl alcohol/titanium oxide composite thin film was transferred onto an alumina porous film (pore diameter, 100 nm), and its morphology was observed with a scanning electronic microscope. Fig. 36 shows the scanning electromicroscopic image of the surface of the polyvinyl alcohol/titanium oxide composite thin film. It was confirmed that the composite thin film has a nano-level smooth surface. Fig. 37 shows the scanning electromicroscopic image of the cross section of the polyvinyl alcohol/titanium oxide composite thin film. It is obvious that composite thin films having a thickness of about 200 nm can be obtained under the production condition as herein. The results confirm that, even when a commercially-available polymer compound is used for the polymer undercoat layer, the intended composite thin films can be obtained according to the method of the invention.

### (Example 9)

A silicon wafer (diameter 20 cm) having a 500 nm-thick photoresist film (Tokyo Ohka Kogyo, TUDR-P015 PM) formed thereon was used as a substrate. The substrate was cut into a piece having a size of about 3 cm × 4 cm. A stream of nitrogen was applied to its surface, by which the surface was dried and dust was removed from it. An aqueous solution of polyvinyl alcohol (by Polyscience; molecular weight, at most 78000) (5 mg/ml) was applied onto the surface in a mode of spin coating (3000 rpm × 2 minutes). The surface was well dried in air, and then a stream of nitrogen was applied to the surface, by which the surface was dried and dust was removed from it. Next, a chloroform solution of titanium butoxide (10 mM) was applied onto the surface in a mode of spin coating (3000 rpm × 2 minutes). Next, for hydrolyzing the alkoxide with water vapor in air, the substrate was left in air for 2 hours. Next, a stream of nitrogen was applied to its surface, by which the surface was dried and dust was removed from it. An aqueous solution of polyvinyl alcohol (by Polyscience; molecular weight, at most 78000) (5 mg/ml) was applied onto the surface in a mode of spin coating (3000 rpm × 2 minutes). The surface was left in air for 2 hours to dry its surface, and then a stream of nitrogen was applied to the surface, by which the surface was dried and dust was removed from it. The spin-coating with the polyvinyl alcohol solution and the titanium butoxide solution were alternately repeated three times each in total. Next, the substrate was scratched with a needle-like tool to a range of about 1 mm from the outer periphery thereof, in order that a solvent could readily penetrate through it. Then, a stream of nitrogen was applied onto the surface, by which the surface was dried and dust was removed from it. The substrate was put on a laboratory dish, and ethanol was gently poured into the dish from the periphery of the substrate to such a degree that the substrate could be well dipped in ethanol. Within a few minutes, the photoresist began to dissolve, and the (polyvinyl alcohol/titanium oxide)₃ composite thin film began to peel from the scratched part of the substrate.

Fig. 38 shows the polyvinyl alcohol/titanium oxide composite thin film separated from the silicon wafer; and Fig. 39 shows the thin film transferred into a sample bottle having a diameter of 27 mm and filled with ethanol. It is obvious that the (polyvinyl alcohol/titanium oxide)₃ composite thin film was obtained in such a manner that the thin film corresponding to the area of the silicon wafer was divided into a few sheets. The thin film was transferred onto an alumina porous film (pore diameter, 100 nm), and its morphology was observed with a scanning electronic microscope. Fig. 40 shows the scanning electromicroscopic image of the surface of the (polyvinyl alcohol/titanium oxide)₃ composite thin film; and Fig. 41 shows the scanning electromicroscopic image of the cross section thereof. The polyvinyl alcohol/titanium oxide composite thin film had a nano-level smooth surface, and it is obvious that composite thin films having a thickness of from about 40 to 200 nm can be obtained under the production condition as herein.

### (Example 10)

An acrylic plate (thickness, 0.3 mm) was used as a solid substrate. The acrylic plate was cut into a piece having a size of about 2.0 cm × 2.5 cm, and its surface was washed with ethanol and dried with a stream of nitrogen.

The substrate was dipped in an ethanol solution of polyacrylic acid (number-average molecular weight, 11700) (10 mM in terms of monomer) for 30 minutes, and rinsed with ethanol, and then a stream of nitrogen was applied to its surface by which the surface was dried and dust was removed from it. Next, the substrate was dipped in an ethanol solution of titanium butoxide (Ti(OⁿBu)₄)) (100 mM) for 10 minutes and then rinsed with ethanol. The alkoxide was hydrolyzed with water, and then a stream of nitrogen was applied to the surface of the substrate by which the surface was dried and dust was removed from it. Next, the substrate was dipped in the above-mentioned polyacrylic acid solution for 10 minutes, and then rinsed with ethanol. A stream of nitrogen was applied to the surface of the substrate by which the surface was dried and dust was removed from it. Next, the substrate was again dipped in the ethanol solution of titanium butoxide. The adsorption operation with these titanium butoxide and polyacrylic acid was repeated 10 times each. After the formation of the last polyacrylic acid layer, the substrate was aged in ultra-pure water at 70°C for 90 minutes, and then a stream of nitrogen was applied to the surface of the substrate by which the surface was dried and dust was removed from it. This substrate was dipped in acetone in a sample tube, whereupon the acrylic plate began to swell and dissolve, and after about 6 hours, the polyacrylic acid/(titanium oxide/polyacrylic acid) 10 composite thin film was obtained in the form thereof separated from the substrate.

Fig. 42 is a photograph of the polyacrylic acid/ (titanium oxide/polyacrylic acid) 10 composite thin film floating in the sample tube having a diameter of 35 mm. The film was obtained as small pieces of a few mm square.

### (Example 11)

A silicon wafer (diameter 20 cm) having a 500 nm-thick photoresist film (TokyoOhkaKogyo, TUDR-P015 PM) formedthereon was used as a substrate. The substrate was cut into a piece having a size of about 3 cm × 4 cm. A stream of nitrogen was applied to its surface, by which the surface was dried and dust was removed from it. An aqueous solution of polyvinyl alcohol (by Polyscience; molecular weight, at most 78000) (5 mg/ml) was applied onto the surface in a mode of spin coating (3000 rpm × 2 minutes). The surface was well dried in air, and then a stream of nitrogen was applied to the surface, by which the surface was dried and dust was removed from it. Next, a chloroform/ethanol (9/1 = v/v) solution of polyacrylic acid (number-average molecular weight, 1070) (0.5 mM in terms of monomer) andtitaniumbutoxide (10 mM) was prepared, and stirred at room temperature for 8 hours, and this was applied onto the surface of the substrate in a mode of spin coating (3000 rpm × 2 minutes). Next, for hydrolyzing the alkoxide with water vapor in air, the substrate was left in air for 10 hours. Next, the substrate was scratched with a needle-like tool to a range of about 1 mm from the outer periphery thereof, in order that a solvent could readily penetrate through it. Then, a stream of nitrogen was applied onto the surface, by which the surface was dried and dust was removed from it. The substrate was put on a laboratory dish, and ethanol was gently poured into the dish from the periphery of the substrate to such a degree that the substrate could be well dipped in ethanol. Within a few minutes, the photoresist began to dissolve, and the polyvinyl alcohol/ (polyacrylic acid+ titanium oxide) composite thin film began to peel from the scratched part of the substrate.

Fig. 43 shows the polyvinyl alcohol/(polyacrylic acid + titanium oxide) composite thin film separated from the silicon wafer; and Fig. 44 shows the thin film transferred into a sample bottle having a diameter of 27 mm and filled with ethanol. It is obvious that the polyvinyl alcohol/(polyacrylic acid + titanium oxide) composite thin film having nearly the same size as the area of the silicon wafer was obtained. The thus-obtained polyvinyl alcohol/(polyacrylic acid + titanium oxide) composite thin film was transferred onto an alumina porous film (pore diameter, 100 nm), and its morphology was observed with a scanning electronic microscope. Fig. 45 shows the scanning electromicroscopic image of the surface of the polyvinyl alcohol/(polyacrylic acid + titanium oxide) composite thin film; and Fig. 46 shows the scanning electronic microscope image of the cross section thereof. It was confirmed that the composite thin film has a nano-level smooth surface and has a thickness of from about 40 nm to 100 nm.

The polyvinyl alcohol/(polyacrylic acid + titanium oxide) composite thin film thus obtained herein was transferred onto a copper grid (with no supporting film; diameter 3.0 mm; mesh pore size 117 µm × 117 µm; grid width 50 µm) for transmission electronic microscopes, and subjected to oxygen plasma treatment at a high-frequency power of 30 W for 30 minutes. The morphology of the thus-processed composite thin film was observed with a transmission electronic microscope. Fig. 47 is a transmission electromicroscopic image of the surface of the polyvinyl alcohol/(polyacrylic acid + titanium oxide) composite thin film after the oxygen plasma treatment. It was confirmed that innumerable pores having an nm-level size exist in the composite thin film. When a polyvinyl alcohol/titanium oxide composite thin film produced without using polyacrylic acid was subjected to oxygen plasma treatment, pores having such an nm-level size were not seen. These results indicate that the pores seen in the polyvinyl alcohol/ (polyacrylic acid + titanium oxide) composite thin film after the oxygen plasma treatment were formed owing to the removal of the polyacrylic acid molecules from the thin film through the oxygen plasma treatment. Since the pore size is larger than the size of one molecule of polyacrylic acid, it is understood that the pores reflect the shape of the domain of the polyacrylic acidmolecules in the thin film.

### (Example 12)

A silicon wafer (diameter 20 cm) having a 500 nm-thick photoresist film (Tokyo Ohka Kogyo, TUDR-P015 PM) formed thereon was used as a substrate. The substrate was cut into a piece having a size of about 3 cm × 4 cm. A stream of nitrogen was applied to its surface, by which the surface was dried and dust was removed from it. An aqueous solution of polyacrylic acid (number-average molecular weight 11700) (5 mg/ml) was applied onto the surface in a mode of spin coating (3000 rpm × 2 minutes). The surface was well dried in air, and then a stream of nitrogen was applied to the surface, by which the surface was dried and dust was removed from it. Titanium butoxide to be 100 mM was added to a chloroform suspension of 4-phenylazobenzoic acid (20 mM). As a result of the titanium butoxide addition thereto, 4-phenylazobenzoic acid dissolved to form a uniform solution. The resulting solution was stirred at room temperature for 8 hours, and then applied onto the surface of the substrate in a mode of spin coating (3000 rpm × 2 minutes). Next, for hydrolyzing the alkoxide with water vapor in air, the substrate was left in air for 20 hours. Next, the substrate was scratched with a needle-like tool to a range of about 1 mm from the outer periphery thereof, in order that a solvent could readily penetrate through it. Then, a stream of nitrogen was applied onto the surface, by which the surface was dried and dust was removed from it. The substrate was put on a laboratory dish, and ethanol was gently poured into the dish from the periphery of the substrate to such a degree that the substrate could be well dipped in ethanol. Within a few minutes, the photoresist began to dissolve, and the polyvinyl alcohol/(4-phenylazobenzoic acid + titanium oxide) composite thin film began to peel from the scratched part of the substrate.

Fig. 48 shows the polyvinyl alcohol/titanium oxide composite thin film separated from the silicon wafer. It is obvious that the polyvinyl alcohol/(4-phenylazobenzoic acid + titanium oxide) composite thin film having a size of about a half of the area of the substrate was obtained. The thus-obtained polyvinyl alcohol/(4-phenylazobenzoic acid + titanium oxide) composite thin film was transferred onto an alumina porous film (pore diameter, 200 nm) , and its morphology was observed with a scanning electronic microscope. Fig. 49 shows the scanning electromicroscopic image of the surface of the polyvinyl alcohol/(4-phenylazobenzoic acid + titanium oxide) composite thin film; and Fig. 50 shows the scanning electromicroscopic image of the cross section thereof. The composite thin film has a nano-level smooth surface, and its thickness was from about 50 nm to 120 nm.

### (Example 13)

A silicon wafer (diameter 20 cm) having a 500 nm-thick photoresist film (Tokyo Ohka Kogyo, TUDR-P015 PM) formed thereon was used as a substrate. The substrate was cut into a piece having a size of about 3 cm × 3 cm. A stream of nitrogen was applied to its surface, by which the surface was dried and dust was removed from it. An aqueous solution of polyvinyl alcohol (by Polyscience; molecular weight, at most 78000) (5 mg/ml) was applied onto the surface in a mode of spin coating (3000 rpm × 2 minutes). The surface was well dried in air, and then a stream of nitrogen was applied to the surface, by which the surface was dried and dust was removed from it. An aqueous solution of sodium metasilicate (Na₂SiO₃) (10 mM) and aluminium nitrate (Al(NO₃)₃) (0.1 mM) was stirred at room temperature for 8 hours to prepare a uniform solution thereof. 0.3 ml of the solution was applied on the surface of the substrate in a mode of spin coating (3000 rpm × 3 minutes). Next, the substrate was left in air for 10 hours, and then this was scratched with a needle-like tool to a range of about 1mm from the outer periphery thereof, in order that a solvent could readily penetrate through it. Then, a stream of nitrogen was applied onto the surface, by which the surface was dried and dust was removed from it. The substrate was put on a laboratory dish, and ethanol was gently poured into the dish from the periphery of the substrate to such a degree that the substrate could be well dipped in ethanol. Within a few minutes, the photoresist began to dissolve, and the polyvinyl alcohol/alumina silicate composite thin film began to peel from the scratched part of the substrate.

The polyvinyl alcohol/alumina silicate composite thin film thus obtained in the manner as above was transferred onto an alumina filter (by Wattman, ANODISC25, 0.1 µm) in such a manner that the film could cover the entire surface of the filter. Next, a part of the samples were subjected to oxygen plasma treatment under a pressure of 180 mTorr and at a high-frequency power of 30 W for 20 minutes to thereby remove polyvinyl alcohol in the composite thin film. The other samples were fired in air at 600°C for 3 hours, at a heating rate of 3°C/min. After thus processed, the samples were observed with a scanning electronic microscope to evaluate the influence of the oxygen plasma treatment and the firing treatment on the morphology of the composite thin film.

Fig. 51 is photographs of the non-processed polyvinyl alcohol/alumina silicate composite thin film transferred onto an alumina porous film, observed with low-resolution and high-resolution scanning electronic microscopes. Fig. 52 is photographs of the composite thin film after the oxygen plasma treatment; and Fig. 53 is photographs of the thin film after the firing treatment. Fig. 51 confirms that the film with alumina silicate also has a nano-level smooth surface like that with titanium oxide. Fig. 52 confirms that after the oxygen plasma treatment, an alumina silicate thin film having a thickness of 20 nm was obtained. Fig. 53 confirms that after the firing treatment an alumina silicate thin film having a thickness of about 20 nm was obtained.

### (Test Example)

This test example is to demonstrate the presence or absence of self-supportability. In this, an alumina porous substrate, Wattman's ANODISC™ 25 or 13 was used as the substrate onto which thin-film materials are transferred.

According to the method shown in the above-mentioned Examples, a thin-film material was separated from the substrate and made to float in a solution. The above-mentioned substrate was dipped in the solution and it was positioned below the floating thin film. Next, the substrate was inclined by about 75 degrees relative to the direction of the normal line of the liquid surface. With it kept inclined, the substrate was gradually pulled up from the liquid into air. In this stage, a part of the end of the thin film was picked up with tweezers together with the substrate, and by utilizing the breakage of the solution line owing to the pulling up of the substrate, the end of the thin film was kept into contact with the substrate. As such, the substrate was gradually pulled up, and from the contact point, the thin film was transferred to the substrate while being tightly adhered thereto. While the solution was separated from the substrate at the vapor-liquid interface, it was confirmed that the thin film having moved to the solution interface was transferred onto the substrate, and then the substrate was gradually pulled up into air. The substrate with the thin film transferred thereto was gently spontaneously dried in air. Depending on the properties of the solution, the surface of the substrate not covered with the thin film was contacted with filter paper, and a major part of the solution was removed from the substrate. Nest, the substrate was spontaneously dried in air. Through the above-mentioned operation, the thin film was transferred onto ANODISC. When the thin film is transferred to any other substrate such as quartz plate, the same process as herein may also be employed.

Thus prepared, the samples were observed with a scanning electronic microscope. When a condition where one sheet of thin film with no defect entirely covers all the pores in the substrate is observed, then it is judged that the thin film has self-supportability. Specifically, since the pore size of the substrate used is at least 20 nm, the sample that can completely cover the pores of the substrate at least having a pore size of 20 nm and, when taken out into air, can still keep its shape without having defects and cracks is judged to be self-supportable.

According to the above-mentioned method of judgment, it was confirmed that the thin-film materials obtained in the above-mentioned Examples were all self-supportable ones.

### INDUSTRIAL APPLICABILITY

The principal characteristics and the industrial applications of the metal oxide thin film or the organic/metal oxide composite thin film produced according to the methods mentioned above are as follows:

According to the invention, self-supporting thin-film materials having a nanometer-level thickness can be produced extremely uniformly. Therefore, the invention is an important basic technology to support high-integration devices of the next generation. Concretely, the invention can be utilized as a technique of producing high-accuracy insulating thin films in the field of electronics, and as a technique of producing high-efficiency reflection films in the field of optoelectronics. In addition, the invention is expected to be applicable also to the production of micro-size magnetic memory chips, etc.

According to the invention, self-supporting thin-film materials can be produced under mild conditions and through simple operations. The self-supporting thin-film materials thus obtained are workable into any shape. Since their producibility is high, they are expected to be widely popularized as coating films for general-purpose products. Concretely, they can be used for surface-protective films for various plastic products, antibacterial coats for medicine and food-related products, antistatic films for clothes and electric products, antioxidant films for complicatedly-shaped instruments, as well as those for imparting scientific and mechanical stability to structural materials.

According to the production methods of the invention, organic/metal oxide composite thin-film layers can be produced in an extremely simplified manner within a short period of time, by contacting a solid with a metal compound and an organic compound. Accordingly, the invention does not require any specific equipment such as computers, except simple instruments, and is expected to attain a high producibility.

In the invention, when the method of dipping a solid substrate in a solution of a metal oxide or an organic compound is employed, then the adsorption is based on the saturation adsorption on the solid surface, and therefore a sufficiently accurate organic/metal oxide thin-film layer can be produced even when the concentration of the metal compound and the organic compound, and the temperature and the time for washing and hydrolysis are not strictly defined. On the other hand, when a spin-coating method is employed, then an adsorbed layer having any desired thickness can be formed merely by changing the concentration of themetal compound in the spin-coating solution and the spinning speed and time.

Further, in the methods of the invention, the organic/metal oxide composite thin film formed on a solid substrate may be separated from the substrate under mild conditions. This means that metal compounds or organic compounds having various properties may be incorporated into the organic/metal oxide composite thin-film layers. In particular, the invention is expected to be widely applicable to bio-functional materials with protein such as enzyme incorporated thereinto, and to medical materials.

In the methods of the invention, various organic/metal oxide composite thin films may be layered with nanometer-level accuracy to produce self-supporting thin film laminates. Therefore, theymaybe planned to have novel electric, electronic, magnetic and/or optofunctional characteristics by themselves. Concretely, the invention is applicable to production of semiconductor ultra-lattice materials and to planning of high-efficiency optochemical reaction and electrochemical reaction. In addition, in the invention, the production costs for the self-supporting organic/metal oxide composite thin films are extremely low as compared with those by any other methods, and the invention couldbe a practicable basic technique for producing optical energy-conversion systems such as solar cells, etc.

In addition, since the self-supporting organic/metal oxide composite thin films obtained according to the invention are soft and flexible like fabric, these can be used for three-dimensionally wrapping beads, fine particles and microcrystals therein, can significantly change the mechanical and physicochemical properties of those thus wrapped therein. Further, the materials produced by transferring the self-supporting organic/metal oxide composite thin film of the invention onto a porous support can be used as permeation membranes having a nanometer-level separation layer. In addition, after the organic/metal oxide composite thin-film layer has been formed, it may be extracted through treatment with aqueous ammonia or may be fired, whereby the incorporated organic compound may be removed from the thin film under a mild condition, and, as a result, the thin-film layer may have pores corresponding to the molecular shape of the organic compound. When the thin-film layer of the type is transferred onto a porous support, then it may be utilized as a molecular structure-selective permeation membrane.

Further, according to the methods of the invention, the composition and the laminate structure of self-supporting organic/metal oxide composite thin films can be planned in any desired manner, and therefore the thin film can be used in producing separation membranes or reverse osmosis membranes for various substances. In addition, when the lamination ratio of two or more different types of metal compounds is stepwise varied, then various inclined functional materials can be produced. A large number of various successive adsorption methods of organic compounds have heretofore been proposed, and when the invention is combined with these, then it is possible to design various types of organic/inorganic composite ultra-thin films, and to produce ultra-thin films having new optical, electronic and chemical functions.

Further, when the self-supporting organic/metal oxide composite thin films obtained according to the invention is processed through oxygen plasma treatment or the like, then all or a part of the organic compound or the polymer compound may be removed from the thin-film layer, and amorphous self-supporting organic/metal oxide composite thin films or metal oxide thin films can be thereby produced. Such thin-film materials have a lower density than that of ordinary metal oxides, and are therefore expected to be usable as ultra-low-dielectric thin-film materials and applicable to production of various sensors. In particular, they are especially useful as insulating materials for micropatterned circuits in size of from 10 to 20 nm or for multi-leveled electronic circuits, and as masking or coating films in micropatterning solid surfaces.

Further, the amorphous self-supporting organic/metal oxide composite thin films have an extremely large number of molecule-sizeporestherein. Accordingly, theycanbeutilized for synthesizing new substances by utilizing their ability to carry catalyst or to capture ions. In addition, when they are used as coating films for various materials, then they may impart different chemical, mechanical and optical properties to the surface of the materials, and their applications to optical catalysts and ultra-hydrophilic surfaces are expected.

## Claims

1. A thin-film material having an overall thickness of at most 300 nm, which comprises a polymer thin-film layer presenting a hydroxyl group or a carboxyl group on the surface thereof, and a metal oxide thin-film layer or an organic/metal oxide composite thin-film layer that bonds to the polymer thin-film layer in a mode of coordinate bonding or covalent bonding by utilizing the hydroxyl group or the carboxyl group.

2. The thin-film material as claimed in claim 1, which is self-supporting.

3. A self-supporting thin-film material having a thickness of at most 300 nm, which is formed on a liquid presenting a hydroxyl group or a carboxyl group on the surface thereof, and which comprises a metal oxide thin film or an organic/metal oxide composite thin film that bonds to the liquid in a mode of coordinate bonding or covalent bonding by utilizing the hydroxyl group or the carboxyl group.

4. The thin-film material as claimed in any of claims 1 to 3, wherein the organic/metal oxide composite thin-film layer has a portion where an organic compound is dispersed in a metal oxide.

5. The thin-film material as claimed in any of claims 1 to 3, wherein the organic/metal oxide composite thin-film layer has a portion where an organic metal oxide and an organic compound form a layered structure in the direction of the thickness thereof.

6. The thin-film material as claimed in any of claims 1 to 3, wherein the organic/metal oxide composite thin-film layer comprise a portion where an organic compound is dispersed in a metal oxide and a portion where an organic metal oxide and an organic compound form a layered structure in the direction of the thickness thereof.

7. The thin-film material as claimed in any of claims 1 to 6, having a structure where at least a part of the organic compound contained in the organic/metal oxide composite thin-film layer is removed.

8. The thin-film material as claimed in any of claims 1, 2 and 4 to 7, having a structure where at least a part of the polymer thin-film layer is removed.

9. The thin-film material as claimed in claim 7 or 8, wherein the removal of the organic compound and/or the polymer thin-film layer is effected through at least one treatment selected from extraction, firing and oxygen plasma treatment.

10. A self-supporting thin-film material comprising a metal oxide thin-film layer and having an overall thickness of at most 300 nm.

11. The thin-film material as claimed in any of claims 1 to 10, which has an area of at least 25 mm².

12. The thin-film material as claimed in any of claims 1 to 11, which has a thickness of from 2 to 300 nm.

13. A method for producing a thin-film material, which comprises a step of forming a metal oxide thin film or an organic/metal oxide composite thin film on a solid substrate or on a film formed on a solid substrate, and a step of separating the thin-film material that contains the metal oxide thin film or the organic/metal oxide composite thin film and has a thickness of at most 300 nm.

14. A method for producing a thin-film material, which comprises a step of forming a polymer thin film that presents a hydroxyl group or a carboxyl group on the surface thereof, on a solid substrate or on a film formed on a solid substrate, a step of forming a metal oxide thin film or an organic/metal oxide composite thin film on the thus-formed polymer thin film, and a step of separating the thin-film material that contains the metal oxide thin film or the organic/metal oxide composite thin film and has a thickness of at most 300 nm.

15. A method for producing a thin-film material, which comprises a step of forming an undercoat layer on a solid substrate or on a film formed on a solid substrate, a step of forming a metal oxide thin film or an organic/metal oxide composite thin film on the thus-formed undercoat layer, and a step of separating the thin-film material that contains the metal oxide thin film or the organic/metal oxide composite thin film and has a thickness of at most 300 nm.

16. A method for producing a thin-film material, which comprises a step of forming an undercoat layer on a solid substrate or on a film formed on a solid substrate, a step of forming a polymer thin film that presents a hydroxyl group or a carboxyl group on the surface thereof, on the thus-formed undercoat layer, a step of forming a metal oxide thin film or an organic/metal oxide composite thin film on the thus-formed polymer thin film, and a step of separating the thin-film material that contains the metal oxide thin film or the organic/metal oxide composite thin film and has a thickness of at most 300 nm.

17. The method for producing a thin-metal material as claimed in claim 13 or 14, wherein the solid substrate is dissolved to separate the thin-film material that contains the metal oxide thin film or the organic/metal oxide composite thin film.

18. The method for producing a thin-metal material as claimed in claim 15 or 16, wherein the undercoat layer is dissolved to separate the thin-film material that contains the metal oxide thin film or the organic/metal oxide composite thin film.

19. The method for producing a thin-metal material as claimed in claim 18, wherein a polymer soluble in an organic solvent is used for the undercoat layer.

20. The method for producing a thin-metal material as claimed in claim 14, 16 or 19, wherein the polymer is formed into a film according to a spin-coating process.

21. The method for producing a thin-metal material as claimed in any of claims 13 to 16, wherein the following step (a) is carried out once or more for the step of forming the metal oxide thin film or the organic/metal oxide composite thin film:
(a) A step of making a metal compound or (metal compound + organic compound) having a group capable of condensing with the hydroxyl group or the carboxyl group that exists on the thin-film-forming surface and hydrolyzing to form a hydroxyl group, adsorbed by the thin-film-forming surface, and then hydrolyzing the metal compound existing on the surface.

22. The method for producing a thin-metal material as claimed in any of claims 13 to 16, wherein the following steps (a) and (b) are carried out once or more each for the step of forming the metal oxide thin film or the organic/metal oxide composite thin film:
(a) A step of making a metal compound or (metal compound + organic compound) having a group capable of condensing with the hydroxyl group or the carboxyl group that exists on the thin-film-forming surface and hydrolyzing to form a hydroxyl group, adsorbed by the thin-film-forming surface, and then hydrolyzing the metal compound existing on the surface;
(b) A step of contacting an organic compound or a cationic polymer compound capable of being chemically adsorbed by the thin-film-forming surface and presenting a hydroxyl group or a carboxyl group on the adsorbed surface, with the thin-film-forming surface to form an organic compound thin film.

23. The method for producing a thin-metal material as claimed in claim 22, wherein the step (a) and the step (b) are alternately carried out.

24. The method for producing a thin-metal material as claimed in any of claims 21 to 23, wherein the step (a) is carried out plural times by the use of plural types of metal compounds or (metal compounds + organic compounds).

25. The method for producing a thin-metal material as claimed in any of claims 21 to 24, wherein the following step (c) is carried out finally in the step of forming the metal oxide thin-film layer or the organic/metal oxide composite thin film:
(c) A step of contacting an organic compound which is adsorbed by the thin-film-forming surface but which does not present a hydroxyl group or a carboxyl group on the adsorbed surface, with the thin-film-forming surface to form an organic compound thin film.

26. The method for producing a thin-metal material as claimed in any of claims 13 to 25, which includes a step of removing at least a part of the organic compound contained in the organic/metal oxide composite thin film.

27. The method for producing a thin-metal material as claimed in any of claims 14 and 16 to 26, which includes a step of removing at least a part of the polymer thin-film layer.

28. The method for producing a thin-metal material as claimed in claim 26 or 27, wherein the removal of the organic compound and/or the polymer thin-film layer is effected through at least one treatment selected from extraction, firing and oxygen plasma treatment.

29. The method for producing a thin-metal material as claimed in any of claims 13 to 28, wherein the thin-film material produced is the thin-film material of any of claims 1 to 11.

30. A method for producing a thin film-attached porous solid substrate, which includes a step of transferring the thin-film material produced according to the production method of any of claims 13 to 29, onto a porous solid substrate.
